# EUROPÄISCHE PATENTSCHRIFT

(11) **EP 3 234 715 B1**
(45) Veröffentlichungstag und Bekanntmachung des Hinweises auf die Patenterteilung: **09.01.2019**
(21) Anmeldenummer: 15797083.1
(22) Anmeldetag: 18.11.2015
(51) Int. Cl.: G05D 1/02

(54) **VERFAHREN ZUR KARTIERUNG EINER BEARBEITUNGSFLÄCHE FÜR AUTONOME ROBOTERFAHRZEUGE**
METHOD FOR MAPPING A PROCESSING AREA FOR AUTONOMOUS ROBOT VEHICLES
PROCÉDÉ DE CARTOGRAPHIE D'UNE SURFACE À TRAITER POUR VÉHICULES ROBOTS AUTONOMES

(30) Priorität: 16.12.2014 DE 102014226084
(43) Veröffentlichungstag der Anmeldung: 25.10.2017
(73) Patentinhaber: Robert Bosch GmbH, 70442 Stuttgart (DE)
(72) Erfinder: BIBER, Peter, 72119 Poltringen (DE); BECKER, Hannes, 72076 Tuebingen (DE); HENSEL, Stefan, 77652 Offenburg (DE)
(86) Internationale Anmeldenummer: PCT/EP2015/076942
(87) Internationale Veröffentlichungsnummer: WO 2016/096304

(56) Entgegenhaltungen:
- WO-A1-2008/136570
- WO-A1-2014/003517

## Beschreibung

### Stand der Technik

Die Erfindung betrifft ein Verfahren zur Kartierung einer Bearbeitungsfläche, insbesondere zur Bestimmung einer Bearbeitungsfläche als Bestandteil eines Navigierverfahrens, für autonome Roboterfahrzeuge. Des Weiteren betrifft die Erfindung ein derartiges Roboterfahrzeug.

WO 2014/003517 A1 beschreibt ein Verfahren zum Steuern eines Roboters. Das Verfahren umfasst die Schritte: Installieren eines mobilen Roboters in einem Arbeitsraum; Ermöglichen, dass der mobile Roboter ein Hindernis erkennt; Unterteilen des Arbeitsraums in mindestens eine Mehrzahl von Zellen, die als Grenzen Verlängerungen einer äußeren Oberfläche des Hindernisses aufweisen; Auswählen einer Zelle aus der Vielzahl von Zellen und Ermöglichen, dass sich der mobile Roboter linear in der ausgewählten Zelle bewegt.

Aus der DE 102013212605 A1 ist ein Verfahren zu einer Arbeitsbereichserfassung zumindest eines Arbeitsbereichs eines autonomen Service-Roboters mittels wenigstens einer Aufnahmeeinheit und einer Generierungseinheit bekannt. Dabei wird in einem ersten Verfahrensschritt vor einem Arbeitsbetrieb des autonomen Service-Roboters durch die wenigstens eine Aufnahmeeinheit zumindest eine visuelle Mediendatei des zumindest einen Arbeitsbereichs aufgenommen und in einem zweiten Verfahrensschritt durch die Generierungseinheit aus der zumindest einen visuellen Mediendatei eine Karte des zumindest einen Arbeitsbereichs generiert.

### Offenbarung der Erfindung

Erfindungsgemäß wird ein Verfahren zur Kartierung einer Bearbeitungsfläche, insbesondere zur Bestimmung einer Bearbeitungsfläche als Bestandteil eines Navigierverfahrens für autonome mobile Roboterfahrzeuge, vorgeschlagen. Das Verfahren sieht vor, dass Grenzlinien zwischen aneinander angrenzenden kartierten und unkartierten Flächenbereichen der zu kartierenden Bearbeitungsfläche durch Vergleich von zurückgelegten Streckenlängen des auf einer initialen Kartierungsfahrt die Bearbeitungsfläche befahrenden Roboterfahrzeugs identifiziert werden, eine Kartierung eines an eine Grenzlinie angrenzenden unkartierten Flächenbereichs von einem Punkt auf einer solchen identifizierten Grenzlinie im Rahmen einer weiteren Kartierungsfahrt des Roboterfahrzeugs in den unkartierten Flächenbereich initiiert wird, und eine Karte der Bearbeitungsfläche auf Grundlage der durch das Roboterfahrzeug kartierten Flächenbereiche erstellt wird.

Unter einem "autonomen Roboterfahrzeug" soll insbesondere ein zumindest teilweise automatisches mobiles Gerät verstanden werden, welches eine Arbeit, bevorzugt eine Bearbeitung einer Fläche (der Bearbeitungsfläche), zumindest teilweise selbsttätig verrichtet. Insbesondere soll das autonome Roboterfahrzeug eine Arbeit selbsttätig beginnen, selbsttätig beenden und/oder selbsttätig zumindest einen Parameter betreffend die Bearbeitung der Bearbeitungsfläche auswählen und/oder beeinflussen. Darüber hinaus soll insbesondere ein Gerät verstanden werden, das sich zumindest zur Verrichtung dieser Arbeit, insbesondere zur Bearbeitung der Bearbeitungsfläche, selbsttätig bewegt und/oder sich vorteilhaft autonom in einem vorgegebenen Arbeitsbereich, der Bearbeitungsfläche, fortbewegt. Typische Anwendungsgebiete solcher Roboterfahrzeuge umfassen vielfältige Tätigkeiten wie beispielsweise kehren, saugen, reinigen, Rasen mähen, (ein)sammeln, sortieren, bewässern, düngen, kartieren oder dergleichen. Daher können relevante Grundsätze und technische Lehren der im Folgenden zur Veranschaulichung der Vorteile der Erfindung aufgezeigten Ausführungsbeispiele selbstverständlich auf beliebige autonome Roboterfahrzeuge, beispielsweise insbesondere autonome Kehrmaschinen, autonome Reinigungsroboter, autonome Schneeräumroboter, autonome Staubsauger, autonome Schwimmbadreinigungsmaschine, autonome Bodenwischroboter, autonome Rasenmäher, autonome Sähmaschinen, autonome Bewässerungsroboter, autonome Düngemaschinen, autonome Kartierungsmaschinen und dergleichen übertragen werden.

Die "Bearbeitungsfläche" bezeichnet insbesondere eine Fläche, die von dem autonomen Roboterfahrzeug zu bearbeiten und im Rahmen des erfindungsgemäßen Verfahrens zur Kartierung zu kartieren ist. Vorteilhaft wird die Bearbeitungsfläche durch eine Begrenzung definiert.

Unter "Kartierung einer Bearbeitungsfläche", "Bestimmung einer Bearbeitungsfläche" und "Erstellung einer Karte" soll insbesondere ein Vorgang verstanden werden, bei dem Informationen, insbesondere Parameter, ortsabhängig, insbesondere raumbezogen, bevorzugt bezogen auf die Bearbeitungsfläche des autonomen Roboterfahrzeugs, erfasst werden. Bei den Informationen kann es sich um Informationen zu Objekten und/oder Sachverhalten handeln, die im Rahmen des Navigierverfahrens notwendig, relevant und/oder sinnvoll sind oder sein können. Vielfältige Beispiele für derartige Informationen sind denkbar, insbesondere beispielsweise im Rahmen einer Kartierung einer Bodenbeschaffenheit, eines Vegetationsvorkommens, eines Hindernis- und/oder Objektvorkommens, einer Eigenschaftenverteilung, eines Chemikalienvorkommens oder eines anderen, einem Fachmann sinnvoll erscheinenden Sachverhalts, insbesondere bodenkundlichen, geologischen und/oder ingenieurstechnischen Sachverhalts bezüglich der Bearbeitungsfläche. Bevorzugt soll unter "Kartierung/Bestimmung einer Bearbeitungsfläche" ein Vorgang verstanden werden, bei dem eine Bearbeitungsfläche zumindest teilweise bestimmt wird, besonders bevorzugt eine Begrenzung der Bearbeitungsfläche erkannt und bestimmt wird. Insbesondere kann eine Kartierung bezüglich Vorkommen von Hindernissen und/oder Grenzen der Bearbeitungsfläche genutzt werden, eine Karte der prinzipiell bearbeitbaren Bearbeitungsfläche zu erstellen.

Bezogen auf einen autonomen Rasenmäher kann eine Kartierung einer Bearbeitungsfläche insbesondere beispielsweise auf folgende Informationen bezogen sein: Rasenvorkommen - damit bevorzugt auch Rasengrenze, Grashöhe, auf dem Gras befindliche Feuchte, Steinvorkommen, Hindernisvorkommen, Steigung/Gefälle des Geländes, gemähter/ungemähter Zustand des Rasens oder dergleichen. Bevorzugt kann eine Kartierung eines Rasenvorkommens in Kombination mit einem Hindernisvorkommen dazu genutzt werden, eine Karte der prinzipiell bearbeitbaren Bearbeitungsfläche, insbesondere Rasenfläche, zu erstellen.

Vorteilhaft werden die im Verlauf des Verfahrens sukzessiv erfassten ortsabhängigen Informationen in Form einer Liste, einer Tabelle, einer Collage, einer Matrix, insbesondere einer mehrdimensionalen Matrix, bevorzugt einer Karte, besonders bevorzugt einer mehrdimensionalen und/oder pseudomehrdimensionalen Karte, einem Grundriss, einem Bodenplan, einem Geländeplan, einer topografische Karte, einer Geländeaufnahme oder auf ähnliche, einem Fachmann sinnvoll erscheinende Weise gesammelt, insbesondere sukzessiv gesammelt. Dabei werden Ergebnisse der Kartierung, insbesondere die betroffenen ortsabhängigen Informationen bezogen auf die Bearbeitungsfläche insbesondere digital in der Karte zusammengefasst, bevorzugt gespeichert, besonders bevorzugt als Grundlage und/oder als Bestandteil eines Navigierverfahrens dem autonomen Roboterfahrzeug zur Verfügung gestellt. Ohne Beschränkung der Allgemeinheit wird im Folgenden der Begriff "Karte" stellvertretend für die genannten Alternativen (Liste, Tabelle, Matrix, ...) verwendet.

Unter "Navigierverfahren" soll ein Verfahren verstanden werden, das zumindest der Navigation, bevorzugt der Ortsveränderung, insbesondere der kinematischen Bewegung, des autonomen Roboterfahrzeugs dient und unter anderem eine autonome mobile Bewegung des Roboterfahrzeugs ermöglicht. In einer Ausführungsform kann das Navigierverfahren insbesondere auch als ein von der Kartierung unabhängiges Verfahren realisiert sein. Vorteilhaft kontrolliert, koordiniert und steuert das Navigierverfahren Aufgaben zu Pfadplanung, Bewegungssteuerung sowie Positionsbestimmung des autonomen Roboterfahrzeugs. Bevorzugt werden im Rahmen des Navigierverfahrens Aufgaben durchgeführt wie beispielsweise Berechnung eines Bewegungsplans, Berechnung einer Fahrtrichtung, Berechnung einer zurückzulegenden Distanz, Initiieren einer Bewegung, Steuerung und/oder Regelung einer Bewegung, insbesondere nach einem Bewegungsplan, Reagieren auf Hindernisse auf der Bearbeitungsfläche und/oder Reagieren auf Begrenzungen der Bearbeitungsfläche, Bestimmen der aktuellen Position, insbesondere Vermessen von Positions- und/oder Odometriedaten, Abstimmen der Position mit einer die Bearbeitung der Bearbeitungsfläche steuernden Steuervorrichtung, Ansteuerung von Bearbeitungsflächen, Beenden einer Bewegung und dergleichen.

Das autonome mobile Roboterfahrzeug beginnt in erfindungsgemäßem Verfahren eine Kartierung der zu kartierenden Bearbeitungsfläche auf einer initialen Kartierungsfahrt, auf der das Roboterfahrzeug die Bearbeitungsfläche sukzessiv befährt und kartiert. Bevorzugt kann die initiale Kartierungsfahrt von einem beliebigen Punkt auf der Bearbeitungsfläche aus und besonders bevorzugt in eine zufällige Richtung gestartet werden. Während dieser initialen Kartierungsfahrt befährt das autonome Roboterfahrzeug die zu kartierende Bearbeitungsfläche eigenständig, insbesondere autonom. Mindestens ist das autonome Roboterfahrzeug dazu ausgelegt, eine zurückgelegte Streckenlänge (alternativ und/oder zusätzlich verknüpfte physikalische Parameter wie Geschwindigkeit, Zeit) zu bestimmen und ein Hindernis auf einer Bahn und/oder eine Begrenzung, insbesondere einen Rand, der Bearbeitungsfläche zu erkennen. Das autonome Roboterfahrzeug weist zumindest eine hierfür vorgesehene Vorrichtung auf, bevorzugt zumindest eine Sensorvorrichtung zur Detektion von Hindernissen und Begrenzungen der Bearbeitungsfläche oder dergleichen, sowie zumindest eine Vorrichtung zur Ermittlung von Positions- und/oder Odometriedaten des autonomen Begrenzungsfahrzeugs, insbesondere von Positions- und/oder Odometriedaten relativ zur befahrenen Bearbeitungsfläche. Beispielhaft kann letztere Vorrichtung in Form einer Traktionskontrolle, die aus einer Umdrehung von Antriebsrädern des autonomen Roboterfahrzeugs eine zurückgelegte Strecke sowie einen zurückgelegten Fahrwinkel ermittelt, realisiert sein. Ferner können weitere Sensorvorrichtungen zur Detektion und/oder Bestimmung weiterer kartenrelevanter Informationen vorgesehen sein.

Unter "vorgesehen" soll insbesondere speziell "programmiert", "ausgelegt" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Trifft das autonome mobile Roboterfahrzeug während seiner initialen Kartierungsfahrt auf ein Hindernis und/oder eine Begrenzung der Bearbeitungsfläche, so wird, sofern möglich, die initiale Kartierungsfahrt nach einer definierten Richtungsänderung des Roboterfahrzeugs innerhalb der zu kartierenden Bearbeitungsfläche fortgesetzt. Dabei legt das autonome mobile Roboterfahrzeug auf seiner initialen Kartierungsfahrt bevorzugt Bahnen zurück, die im Wesentlichen in Form eines definierten Musters aufeinander folgen. "Im Wesentlichen" meint hier insbesondere, dass kurze Bahnen, wie sie beispielsweise im Rahmen von Wenden und/oder Richtungsänderungen zurückgelegt werden, nicht bei dieser Betrachtung berücksichtigt werden. Dieses Muster aufeinanderfolgender Bahnen besteht besonders bevorzugt aus parallelen Bahnen mit 180°-Wenden an deren Enden. Alternativ sind auch andere Muster denkbar, beispielsweise in Form von Halbkreisen zu- oder abnehmenden Radius, in Form von Dreiecken zu- oder abnehmender Fläche, in Spiralform oder in sonstiger, einem Fachmann als sinnvoll erscheinender Form. Prinzipiell lässt sich das erfindungsgemäße Verfahren selbst mit ungeordneten Mustern, beispielsweise zufälligen Mustern, nach denen das autonome mobile Roboterfahrzeug die zu kartierende Bearbeitungsfläche befährt, durchführen. Aus jedem beliebigen Muster kann unter Verwendung entsprechend komplexer Algorithmen, auszuführen von einer Auswerteeinheit, ein erfindungsgemäßer Vergleich von zurückgelegten Streckenlängen auf befahrenen Bahnen stattfinden. Dabei nimmt der Aufwand zur Berechnung dieser zurückgelegten Streckenlängen und des daraus ableitbaren Vergleichs mit zunehmender Komplexizität des Musters jedoch zu. Daher stellt ein Muster von insbesondere parallelen Bahnen, vorzugsweise nebeneinanderliegenden Bahnen, mit 180°-Wenden an deren Enden ein besonders einfaches Muster dar und erfordert insbesondere besonders wenig Aufwand zum Vergleich der zurückgelegten Streckenlängen auf diesen Bahnen. In einer besonders bevorzugten Ausführungsform des erfindungsgemäßen Verfahrens werden die parallelen Bahnen, vorzugsweise die nebeneinanderliegenden Bahnen, aufeinanderfolgend durch das Roboterfahrzeug befahren. Alternativ können nebeneinanderliegende Bahnen aber auch nicht aufeinanderfolgend, sondern in beliebigen Abfolgen, insbesondere periodischen Abfolgen befahren werden. Beispielsweise ist denkbar, dass ein autonomes Roboterfahrzeug beispielsweise auf die erste befahrene Bahn zunächst eine weitere Bahn befährt, die im resultierenden Muster der Bahnen als vierte benachbarte Bahn resultiert.

Ist eine Weiterfahrt des autonomen mobilen Roboterfahrzeugs nach einer Wende oder die Wende selbst nicht möglich, so ist die initiale Kartierungsfahrt beendet.

Durch Vergleich von zurückgelegten Streckenlängen des auf der initialen Kartierungsfahrt die Bearbeitungsfläche befahrenden Roboterfahrzeugs werden im Rahmen des Verfahrens zur Kartierung der Bearbeitungsfläche Grenzlinien zwischen aneinander angrenzenden kartierten und unkartierten Flächenbereichen identifiziert. "Flächenbereiche" stellen dabei jeweils zusammenhängende Teilstücke der gesamten zu kartierenden Bearbeitungsfläche dar, wobei sich ein unkartierter Flächenbereich von einem kartierten Flächenbereich dahingehend unterscheidet, dass das autonome mobile Roboterfahrzeug den unkartierten Flächenbereich noch nicht befahren und somit auch noch nicht kartiert hat im Sinne des erfindungsgemäßen Verfahrens.

Unter einer "Grenzlinie" ist insbesondere eine virtuelle Linie zu verstehen, die bevorzugt gemeinsam mit den im Rahmen der Kartierung der Bearbeitungsfläche erfassten Informationen zumindest temporär zusammengefasst, bevorzugt gespeichert, besonders bevorzugt als Grundlage und/oder als Bestandteil des Navigierverfahrens dem autonomen Roboterfahrzeug zur Verfügung gestellt wird. Besonders bevorzugt können dazu eine Grenzlinie bestimmende Parameter, beispielsweise insbesondere Anfangs- und Endpunkt und/oder Anfangspunkt, Richtung und Länge der Grenzlinie, relativ zur Bearbeitungsfläche bestimmt und verarbeitet werden. Ferner können auch die Lage des unkartierten Bereichs bezüglich der Grenzlinie bestimmende Parameter (z.B. "links/rechts von der Grenzlinie") berücksichtigt werden. Eine oder mehrere Grenzlinien dienen in dem erfindungsgemäßen Verfahren zur Kartierung vorteilhaft der Markierung bislang auf der initialen Kartierungsfahrt noch unkartierter Flächenbereiche in Abgrenzung zu bereits kartierten Flächenbereichen. Insbesondere kann beispielsweise eine solche Grenzlinie als Bestandteil, insbesondere als Teilabschnitt, einer befahrenen Bahn definiert werden. Im weiteren Verlauf des Verfahrens, bevorzugt nach Beenden der initialen Kartierungsfahrt, wird ein Punkt auf einer solchen identifizierten Grenzlinie angefahren, um eine Kartierung des an die Grenzlinie angrenzenden unkartierten Flächenbereichs im Rahmen einer weiteren Kartierungsfahrt zu initiieren. Insbesondere kann die Lage dieses Punkts auf einer identifizierten Grenzlinie aus den die Position der zugehörigen Grenzlinie bestimmenden Parametern berechnet und/oder bestimmt werden. Wurde während der initialen Kartierungsfahrt keine Grenzlinie identifiziert, so ist keine weitere Kartierungsfahrt nötig, um die gesamte Bearbeitungsfläche flächendeckend zu kartieren. Der Punkt kennzeichnet insbesondere diejenige Stelle auf einer Grenzlinie, von der aus eine Kartierung des an die Grenzlinie angrenzenden unkartierten Flächenbereichs im Rahmen einer weiteren Kartierungsfahrt initiiert, bevorzugt begonnen wird.

Die Kartierung der Bearbeitungsfläche erfolgt erfindungsgemäß sukzessiv auf Grundlage der durch das Roboterfahrzeug kartierten, insbesondere befahrenen, Flächenbereiche. Eine Karte der Bearbeitungsfläche kann abschließend einmalig oder ebenfalls sukzessive auf Grundlage der durch das Roboterfahrzeug kartierten Flächenbereiche erstellt werden. Unter "sukzessive erstellt" kann insbesondere verstanden werden, dass bereits vorhandene Informationen ergänzt und/oder modifiziert und/oder überschrieben und/oder neu angelegt werden. Bevorzugt werden durch eine weitere Kartierungsfahrt erhaltene Informationen zu den auf einer initialen Kartierungsfahrt sowie vorhergehenden weiteren Kartierungsfahrten gesammelten Informationen hinzugefügt.

Durch das erfindungsgemäße Verfahren kann vorteilhaft eine einfache und gezielte Kartierung einer Bearbeitungsfläche, insbesondere eine Bestimmung einer Bearbeitungsfläche als Bestandteil eines Navigierverfahrens, für autonome mobile Roboterfahrzeuge realisiert werden. Besonders vorteilhaft kann eine Kartierung der Bearbeitungsfläche ohne jegliche vorherige Kenntnis von die Bearbeitungsfläche spezifizierenden Details, insbesondere Details bezüglich eines Vorhandenseins von Hindernissen und/oder Begrenzungen und/oder Umrissen der Bearbeitungsfläche, durchgeführt werden. Das autonome Roboterfahrzeug befährt und kartiert im Rahmen der initialen Kartierungsfahrt die Bearbeitungsfläche zumindest teilweise, sodass zumindest ein kartierter Flächenbereich resultiert. Durch Vergleich von zurückgelegten Streckenlängen des autonomen Roboterfahrzeugs werden dabei - insbesondere während der initialen Kartierungsfahrt, ebenfalls aber auch gegebenenfalls im Anschluss an die initiale Kartierungsfahrt im Rahmen weiterer Kartierungsfahrten - Grenzlinien zwischen aneinander angrenzenden kartierten und unkartierten Flächenbereichen der zu kartierenden Bearbeitungsfläche identifiziert. Nach Beenden der initialen Kartierungsfahrt wird anschließend ausgehend von jeweils einem Punkt auf einer identifizierten Grenzlinie eine Kartierung des an die jeweilige Grenzlinie angrenzenden unkartierten Flächenbereichs im Rahmen je einer weiteren Kartierungsfahrt initiiert. Prinzipiell können sich die Verfahrensschritte bis zur Beendigung des Verfahrens iterativ wiederholen.

Die Karte der Bearbeitungsfläche wird entweder sukzessive oder im Anschluss an die Kartierungsfahrten auf Grundlage der durch das Roboterfahrzeug kartierten Flächenbereiche erstellt. Vorzugsweise beinhaltet diese Karte alle gesammelten Informationen über die kartierten Flächenbereiche sowohl der initialen Kartierungsfahrt als auch jeder weiteren Kartierungsfahrt. Flächenbereiche, die weder in einer initialen Kartierungsfahrt noch in einer weiteren Kartierungsfahrt des autonomen Roboterfahrzeugs kartiert werden können/konnten, werden in der Karte als Hindernis oder unkartierbare Flächenbereiche gekennzeichnet. Folglich weist die resultierende Karte des erfindungsgemäßen Verfahrens zur Kartierung einer Bearbeitungsfläche besonders vorteilhaft eine (theoretisch) vollständige Abdeckung der Bearbeitungsfläche auf, aus der kartierte Bearbeitungsflächen sowie Hindernisse (unkartierbare Flächenbereiche) hervorgehen. Insbesondere beträgt die Abdeckung der Karte bezogen auf die reale (physikalisch erreichbare) Bearbeitungsfläche mehr als 80 %, vorteilhaft mehr als 90 %, besonders vorteilhaft mehr als 95 %.

Im Vergleich zu autonomen mobilen Roboterfahrzeugen des Stands der Technik, die eine Bearbeitungsfläche stochastisch befahren, erlaubt das erfindungsgemäße Verfahren eine Kartierung der Bearbeitungsfläche in systematischer Weise und somit wirtschaftlich besonders vorteilhaft in deutlich kürzerer Zeit und unter Zurücklegung einer kürzeren gesamten Streckenlänge. Insbesondere lässt sich in Folge einer Kartierung in systematischer Weise durch Vermeidung mehrfach befahrener Bahnen und/oder Flächen eine Ersparnis von Energie realisieren, sodass das autonome Roboterfahrzeug bei begrenzter Energieversorgung eine vergleichsweise größere Bearbeitungsfläche kartieren kann als ein autonomes Roboterfahrzeug des Stands der Technik.

In einer bevorzugten Ausführungsform des erfindungsgemäßen Verfahrens zur Kartierung einer Bearbeitungsfläche sind die initiale Kartierungsfahrt und die weitere Kartierungsfahrt und/oder weitere Kartierungsfahrten über eine Transferfahrt des Roboterfahrzeugs verbunden.

Auf diese Weise kann eine besonders einfache und schnelle Anfahrt des Roboterfahrzeugs zu dem Punkt auf der Grenzlinie und folglich eine schnelle Kartierung des an die Grenzlinie angrenzenden unkartierten Flächenbereichs stattfinden. Während der Transferfahrt kann eine weitere Kartierung stattfinden oder in einer alternativen Ausführungsform die Kartierung während der Transferfahrt unterbrochen werden. Vorteilhaft ist das Navigierverfahren des autonomen Roboterfahrzeugs dazu ausgelegt, mittels der bereits gesammelten Informationen bezüglich der Position der Grenzlinie sowie bezüglich eventuell vorhandener Hindernisse und/oder Begrenzungen der Bearbeitungsfläche eine kurze und bevorzugt hindernisfreie Transferfahrt zu dem insbesondere berechneten Punkt auf der Grenzlinie zu planen und durchzuführen. Somit kann zur Durchführung des Kartierungsverfahrens benötigte Zeit und Energie des Roboterfahrzeugs besonders vorteilhaft reduziert werden.

In einer bevorzugten Ausführungsform des erfindungsgemäßen Verfahrens zur Kartierung einer Bearbeitungsfläche wird eine Grenzlinie zwischen aneinander angrenzenden kartierten und unkartierten Flächenbereichen identifiziert, wenn sich zurückgelegte Streckenlängen des Roboterfahrzeugs auf nebeneinanderliegenden Bahnen, insbesondere aufeinanderfolgenden Bahnen, um einen Relativ- und/oder Absolutbetrag voneinander unterscheiden.

Durch Vergleich zurückgelegter Streckenlängen des Roboterfahrzeugs auf nebeneinanderliegenden Bahnen, insbesondere aufeinanderfolgenden Bahnen, kann vorteilhaft auf einfache, zuverlässige und besonders wirtschaftliche Weise ein Hindernis auf der Bearbeitungsfläche, vorteilhaft ein Hindernis auf einer der Bahnen, besonders vorteilhaft ein Hindernis auf der kürzeren der Bahnen, erkannt werden: Unterscheiden sich die Bahnlängen nebeneinanderliegender Bahnen um einen Relativ- und/oder Absolutbetrag voneinander, so impliziert dies, dass das Roboterfahrzeug aufgrund eines Hindernisses auf der kürzeren der Bahnen nur eine verkürzte Streckenlänge zurücklegen konnte. Insbesondere lassen sich Vorgaben für den Relativ- und/oder Absolutbetrag, um den sich Streckenlängen zweier Bahnen zur Feststellung einer Differenz unterscheiden müssen, definieren. Vorteilhaft können somit Ungenauigkeit der Streckenlängenbestimmung als Ursache einer fälschlichen Hinderniserkennung ausgeschlossen werden.

Die Vorgaben für den Relativ- und/oder Absolutbetrag, um den sich Streckenlängen zweier Bahnen zur Feststellung einer Differenz unterscheiden müssen, hängen insbesondere von der Ausführungsform des autonomen Roboterfahrzeugs ab, beispielsweise von einer Länge und/oder Breite des Roboterfahrzeugs, von der verwendeten Positions- und/oder Odometrievorrichtung und der damit einhergehenden Genauigkeit bei der Positionsbestimmung und dergleichen. In einer beispielhaften Ausführungsform des erfindungsgemäßen Verfahrens, insbesondere bezogen auf einen autonomen Rasenmäher, kann ein Relativbetrag insbesondere bei 10 %, vorteilhaft bei 5 %, besonders vorteilhaft bei 1 % liegen, und ein Absolutbetrag insbesondere bei 200 cm, vorteilhaft bei 100 cm, besonders vorteilhaft bei 50 cm liegen. Im Falle eines autonomen Roboterfahrzeug, welches sich auf relativ ebenen Böden z.B. eines Innenraums bewegt, kann eine Positionsbestimmung deutlich genauer durchgeführt werden, sodass sich hier ebenfalls erheblich geringere Vorgaben für den Relativ- und/oder Absolutbetrag, um den sich Streckenlängen zweier Bahnen zur Feststellung einer Differenz unterscheiden müssen, definieren lassen. In einem solchen Ausführungsbeispiel könnten ein Relativbetrag insbesondere bei 1 %, vorteilhaft bei 0.5 %, besonders vorteilhaft bei 0.1 % liegen, und ein Absolutbetrag insbesondere bei 50 cm, vorteilhaft bei 25 cm, besonders vorteilhaft bei 10 cm liegen.

In einer bevorzugten Ausführungsform des erfindungsgemäßen Verfahrens zur Kartierung einer Bearbeitungsfläche wird eine identifizierte Grenzlinie der längeren zweier nebeneinanderliegender Bahnen, insbesondere aufeinanderfolgenden Bahnen, zugeordnet.

Auf diese Weise kann mittels Zuordnung einer identifizierten Grenzlinie zu einer längeren zweier nebeneinanderliegender Bahnen, insbesondere aufeinanderfolgenden Bahnen, eine Lokalisierung der Grenzlinie erfolgen. Bevorzugt können dabei eine Grenzlinie bestimmende Parameter, beispielsweise insbesondere Anfangs- und Endpunkt und/oder Anfangspunkt, Richtung und Länge der Bahn, der die Grenzlinie zugeordnet wird, relativ zur Bearbeitungsfläche ausgewertet und/oder verarbeitet, insbesondere gespeichert und/oder dem Gerät zur Verfügung gestellt werden.

In einer bevorzugten Ausführungsform des erfindungsgemäßen Verfahrens zur Kartierung einer Bearbeitungsfläche stellt eine identifizierte Grenzlinie denjenigen Teil einer längeren Bahn, insbesondere parallelen Bahn, dar, der über die verglichene Strecke der kürzeren Bahn hinausragt.

Auf diese Weise kann erreicht werden, dass ein unkartierter Flächenbereich - insbesondere ein eventuell hinter dem Hindernis befindlicher kartierbarer Flächenbereich - mittels einer Grenzlinie an einer dem Hindernis abgewandten Seite gekennzeichnet wird. Insbesondere wird der unkartierte Flächenbereich dadurch an einer solchen Stelle einer längeren, an dem Hindernis seitlich vorbeiführenden Bahn gekennzeichnet, an der eine Einfahrt in den unkartierten, an die Grenzlinie angrenzenden, insbesondere kartierbaren Flächenbereich, ohne Behinderung durch das Hindernis möglich sein kann. "Kartierba" meint hier durch das autonome mobile Roboterfahrzeug hindernisfrei erreichbar, befahrbar und somit vermessbar.

In einer vorteilhaften Ausführungsform des erfindungsgemäßen Verfahrens zur Kartierung einer Bearbeitungsfläche fährt das Roboterfahrzeug die zu kartierende Bearbeitungsfläche während einer Kartierungsfahrt in definiertem Muster, vorzugsweise in im Wesentlichen parallelen Bahnen mit Wenden an deren Enden, insbesondere nebeneinanderliegenden Bahnen mit 180°-Wenden an deren Enden, ab.

Unter "parallelen Bahnen" soll insbesondere verstanden werden, dass die Bahnen bezogen auf die gesamte Länge parallel zueinander verlaufen, allerdings Schwankungen möglich sind, die der Bearbeitungsflächenstruktur und/oder der Genauigkeit, mit der das Roboterfahrzeug eine Bahn in einer Richtung befahren kann, geschuldet sein können. "Im Wesentlichen" kennzeichnet, dass die Bahnen in der Praxis geringfügige Abweichungen von einer exakten Parallelität aufweisen können, insbesondere von unter 10°, vorteilhaft von unter 5°, besonders vorteilhaft von unter 1°.

Bei einem Vergleich von parallelen, insbesondere nebeneinanderliegenden, Bahnen kann besonders einfach und unmittelbar ein Unterschied in zurückgelegten Streckenlängen des die Bahnen befahrenden Roboterfahrzeugs festgestellt werden und daraus auf das Vorhandensein von Hindernissen geschlossen werden. Daher stellt das Befahren der Bearbeitungsfläche in vorzugsweise parallelen Bahnen mit Wenden an deren Enden, insbesondere nebeneinanderliegenden Bahnen mit 180°-Wenden an deren Enden, die einfachste und wirtschaftlich sinnvollste Weise dar, in der das autonome mobile Roboterfahrzeug die Bearbeitungsfläche befahren kann. Aufgrund der gradlinigen Struktur und der kurzen Versatzfahrwege zwischen zwei parallelen, insbesondere nebeneinanderliegenden, Bahnen im Rahmen der Wenden, insbesondere 180°-Wenden, erlaubt diese Weise der Fortbewegung des auf einer Kartierungsfahrt die Bearbeitungsfläche befahrenden autonomen Roboterfahrzeugs eine besonders ökonomische und zeitsparsame Kartierung der Bearbeitungsfläche. Darüber hinaus bewegt sich das autonome mobile Roboterfahrzeug vorteilhaft in besonders geordneten Bahnen, die einen Betrachter des Roboterfahrzeugs dessen intelligente Steuerung erkennen lässt.

Durch geeignete Wahl des Versatzes zwischen jeweils parallelen Bahnen, insbesondere jeweils nebeneinanderliegenden Bahnen, kann erreicht werden, dass das Roboterfahrzeug die Bearbeitungsfläche verlust- und/oder überlappfrei kartiert. Insbesondere kann der Abstand entsprechend der Breite des Roboterfahrzeugs gewählt werden, vorteilhaft entsprechend der Breite, mit der ein weiterer Sensor zur Kartierung der Bearbeitungsfläche während des Befahrens einer Bahn die Bearbeitungsfläche auf dieser Bahn kartiert.

Im Folgenden wird die Richtung, in der die durch das Roboterfahrzeug zurückgelegten Bahnen, d.h. insbesondere die parallelen und/oder nebeneinanderliegenden Bahnen, im Wesentlichen verlaufen, als Vorzugsfahrtrichtung bezeichnet.

In einer vorteilhaften Ausführungsform des erfindungsgemäßen Verfahrens zur Kartierung einer Bearbeitungsfläche wird nach Beenden der initialen Kartierungsfahrt ein Punkt auf einer identifizierten Grenzlinie angefahren und von diesem Punkt aus die Kartierung des an die Grenzlinie angrenzenden unkartierten Flächenbereichs im Rahmen einer weiteren Kartierungsfahrt des Roboterfahrzeugs in den angrenzenden unkartierten Flächenbereich initiiert.

Vorteilhaft wird nach Beenden der initialen Kartierungsfahrt ein Punkt auf einer identifizierten Grenzlinie mittels einer Transferfahrt angefahren. Eine Kartierung des bislang unkartierten Flächenbereichs wird daraufhin von dem auf der Grenzlinie befindlichen Punkt aus im Rahmen einer weiteren Kartierungsfahrt initiiert. Bevorzugt kann sich die Vorzugsfahrtrichtung des autonomen Roboterfahrzeugs auf seiner weiteren Kartierungsfahrt in den noch zu kartierenden Bereich in gleicher Richtung erstrecken wie die Vorzugsfahrtrichtung auf der initialen Kartierungsfahrt. Alternativ kann die Vorzugsfahrtrichtung des autonomen Roboterfahrzeugs auf seiner weiteren Kartierungsfahrt auch in eine beliebige andere Richtung, beispielsweise insbesondere senkrecht bezogen auf die Vorzugsfahrtrichtung der initialen Kartierungsfahrt, liegen.

Besonders bevorzugt kann das autonome Roboterfahrzeug im Rahmen des Kartierungsverfahrens bereits kartierte Flächenbereiche erkennen und auf diese Weise eine wiederholte Kartierung bereits kartierter Flächenbereiche vermeiden. Insbesondere kann die Erkennung des bereits kartierten Flächenbereichs auf Grundlage der während der vorhergehenden Kartierungsfahrten bereits gesammelten Informationen, vorzugsweise auf Grundlage gesammelter Informationen zur Lage/Position bereits kartierter Flächenbereiche bezogen auf die Bearbeitungsfläche, erfolgen. Dies erlaubt vorteilhaft eine besonders wirtschaftliche und schnelle Kartierung der Bearbeitungsfläche.

Die Festlegung der Lage des Punktes auf einer Grenzlinie kann entweder nach einer festen Routine erfolgen, beispielsweise über einen fest definierten Abstand zum Anfang oder Ende der Grenzlinie. Alternativ kann die Festlegung der Lage des Punktes auch aus den die Grenzlinie charakterisierenden Parametern berechnet werden, beispielsweise derart, dass der Punkt in der Mitte der Grenzlinie liegt.

In einer vorteilhaften Ausführungsform des erfindungsgemäßen Verfahrens zur Kartierung einer Bearbeitungsfläche wird bei Erreichen eines Hindernisses auf der ersten Bahn der weiteren Kartierungsfahrt, das einen geringeren Abstand als eine definierte Entfernung von dem Punkt aufweist, von dem aus die Kartierung des an die Grenzlinie angrenzenden unkartierten Flächenbereichs initiiert wurde, ein weiterer Punkt auf der Grenzlinie angefahren.

Auf diese Weise kann vorteilhaft erreicht werden, dass, falls eine Einfahrt des autonomen Roboterfahrzeugs in den bislang unkartierten, eventuell kartierbaren Bereich durch ein Hindernis, insbesondere ein weiteres Hindernis, nicht möglich sein sollte, ein weiterer Versuch zur Kartierung des an die Grenzlinie angrenzenden unkartierten Flächenbereichs von einem weiteren Punkt auf der Grenzlinie aus initiiert wird. Besonders vorteilhaft kann das Anfahren eines weiteren Punktes auf der Grenzlinie sowie Initiieren einer weiteren Kartierungsfahrt iterativ durchgeführt werden, bis entweder eine mögliche Einfahrt des autonomen Roboterfahrzeugs in den unkartierten angrenzenden Flächenbereich weitere Versuche hinfällig macht oder kein weiterer Punkt auf der Grenzlinie mehr angefahren werden kann. Das autonome Roboterfahrzeug kann also eine Kartierung des an die Grenzlinie angrenzenden unkartierten Flächenbereichs vorteilhaft auch dann durchführen, wenn die Einfahrt in den zu kartierende Flächenbereich zumindest teilweise durch ein Hindernis behindert ist. Sollte eine Einfahrt des autonomen Roboterfahrzeugs in den an die Grenzlinie angrenzenden unkartierten Flächenbereich von keinem Punkt auf der Grenzlinie aus möglich sein, wird der Flächenbereich als Hindernis gekennzeichnet. Einem Betrachter des autonomen Roboterfahrzeugs erscheint diese Strategie des Kartierungsverfahrens ebenfalls als besonders intelligent.

In einer vorteilhaften Ausführungsform des erfindungsgemäßen Verfahrens zur Kartierung einer Bearbeitungsfläche befindet sich der weitere Punkt in definiertem Abstand zu dem ersten Punkt auf der Grenzlinie, insbesondere einem Abstand, der im Wesentlichen der Breite des Roboterfahrzeugs entspricht, und wird von diesem weiteren Punkt aus die Kartierung des an die Grenzlinie angrenzenden unkartierten Flächenbereichs im Rahmen der weiteren Kartierungsfahrt erneut initiiert.

Auf diese Weise wird besonders vorteilhaft erreicht, dass die Anzahl der Punkte auf der Grenzlinie, von denen aus eine Kartierung des an die Grenzlinie angrenzenden unkartierten Flächenbereichs aus initiiert werden kann, limitiert ist. Die Wahl dieses Abstands bevorzugt entsprechend der Breite des Roboterfahrzeugs stellt dabei einen vorteilhaften Kompromiss aus minimalem und maximalem sinnvollen Abstand dar.

Alternativ kann die Festlegung der Lage des weiteren Punktes und/oder der weiteren Punkte entweder nach einer festen Routine erfolgen - beispielsweise über einen festen Abstand zum ersten bzw. vorigen weiteren Punkt - oder aus den die Grenzlinie charakterisierenden Parametern berechnet werden.

In einer vorteilhaften Ausführungsform des erfindungsgemäßen Verfahrens zur Kartierung einer Bearbeitungsfläche wird der ersten zurückgelegten Bahn der initialen Kartierungsfahrt auf deren gesamten Strecke eine Grenzlinie zugewiesen.

Auf diese Weise wird sichergestellt, dass derjenige Flächenbereich der zu kartierenden Bearbeitungsfläche, der bei der ersten Wende des Roboterfahrzeugs in die folgende, insbesondere parallele Bahn nicht angefahren wird, nach Abschluss der initialen Kartierungsfahrt in einer weiteren Kartierungsfahrt kartiert werden kann. Die Zuweisung dieser Grenzlinie erlaubt eine insbesondere flächendeckende Kartierung der zu kartierenden Bearbeitungsfläche unabhängig von der Vorzugsfahrtrichtung und dem Standort, in die bzw. von dem aus das autonome Roboterfahrzeug die Kartierung des Bearbeitungsbereichs beginnt. Dies ist insbesondere dann besonders vorteilhaft, wenn das autonome Roboterfahrzeug auf einer initialen Kartierungsfahrt seine Fahrt auf einer Bahn in eine zufällig gewählte Vorzugsfahrtrichtung beginnt.

In einer vorteilhaften Ausführungsform des erfindungsgemäßen Verfahrens zur Kartierung einer Bearbeitungsfläche wird jeder zurückgelegten Bahn einer Kartierungsfahrt, bei der eine definierte Bahnlänge erreicht wurde, eine Grenzlinie zugewiesen, die sich in Verlängerung der Bahn in Fahrtrichtung des Roboterfahrzeugs erstreckt.

Ausführungsbedingt kann eine definierte Bahnlänge vorgesehen und geräteintern bereitgestellt sein, die eine maximal zurückzulegende Streckenlänge des Roboterfahrzeugs auf einer befahrenen Bahn auf eine entsprechende Länge limitiert, sodass nach Erreichen der maximal zurückzulegenden Streckenlänge eine Wende des Roboterfahrzeugs durchgeführt wird, obgleich kein Hindernis und/oder keine Begrenzung der Bearbeitungsfläche erreicht und/oder detektiert wurde. Eine derartige Limitierung der maximal zurückzulegenden Bahnlänge kann beispielsweise aus Gründen der Positionsgenauigkeit und/oder der Energieversorgung des Roboterfahrzeugs notwendig sein. Erfindungsgemäß wird jeder zurückgelegten Bahn einer Kartierungsfahrt, bei der diese definierte Bahnlänge erreicht wird, eine Grenzlinie zugewiesen, die sich in Verlängerung der entsprechenden Bahn erstreckt. Auf diese Weise kann vorteilhaft erreicht werden, dass ein an die Bahnlänge angrenzender unkartierter Flächenbereich, insbesondere ein in Verlängerung der entsprechenden Bahn angrenzender unkartierter Flächenbereich, mittels einer Grenzlinie gekennzeichnet wird. Besonders vorteilhaft kann dieser gekennzeichnete unkartierte Flächenbereich nach Beenden der initialen Kartierungsfahrt im Rahmen einer weiteren Kartierungsfahrt des autonomen Roboterfahrzeugs kartiert werden.

Typische maximal zurückzulegende Streckenlängen können insbesondere von einer Ausführung des autonomen Roboterfahrzeugs abhängen. Beispielsweise bezogen auf autonome Rasenmäher, deren Positions- und/oder Odometrievorrichtung in Form einer Traktionskontrolle, die aus einer Umdrehung von Antriebsrädern des autonomen Roboterfahrzeugs eine zurückgelegte Strecke sowie einen zurückgelegten Fahrwinkel ermittelt, realisiert ist, kann die maximal zurückzulegende Streckenlänge insbesondere mehr als 5 m betragen, bevorzugt mehr als 10 m, besonders bevorzugt mehr als 15 m. Im Falle eines autonomen Roboterfahrzeug, welches sich auf relativ ebenen Böden eines Innenraums bewegen, kann eine Positionsbestimmung deutlich genauer durchgeführt werden, sodass sich hier erheblich längere maximal zurückzulegende Streckenlängen ergeben können, beispielsweise insbesondere mehr als 15 m, bevorzugt mehr als 30 m, besonders bevorzugt mehr als 50 m. Besonders vorteilhaft kann somit eine vollständige, d.h. flächendeckende, Kartierung der zu kartierenden Bearbeitungsfläche auch dann realisiert werden, wenn die Bahnlänge auf eine maximal zurückzulegende Streckenlänge des Roboterfahrzeugs begrenzt ist.

In einer vorteilhaften Ausführungsform des erfindungsgemäßen Verfahrens zur Kartierung einer Bearbeitungsfläche wird die Karte der Bearbeitungsfläche als Gesamtfläche der durch das Roboterfahrzeug kartierten Flächenbereiche erstellt.

Vorteilhaft werden die im Verlauf des Verfahrens sukzessiv erfassten ortsabhängigen Informationen in Form einer Liste, einer Tabelle, einer Collage, einer Matrix, insbesondere einer mehrdimensionalen Matrix, bevorzugt einer Karte, besonders bevorzugt einer mehrdimensionalen und/oder pseudomehrdimensionalen Karte, einem Grundriss, einem Bodenplan, einem Geländeplan, einer topografische Karte, einer Geländeaufnahme oder auf ähnliche, einem Fachmann sinnvoll erscheinende Weise gesammelt, insbesondere sukzessiv gesammelt. Dabei werden Ergebnisse der Kartierung, insbesondere die ortsabhängigen Informationen bezogen auf die Bearbeitungsfläche, insbesondere digital in der Karte zusammengefasst, bevorzugt gespeichert, besonders bevorzugt als Grundlage und/oder als Bestandteil eines Navigierverfahrens dem autonomen Roboterfahrzeug zur Verfügung gestellt.

Die Karte der Bearbeitungsfläche wird entweder sukzessive oder im Anschluss an die Kartierungsfahrten auf Grundlage der durch das Roboterfahrzeug kartierten Flächenbereiche erstellt. Vorzugsweise beinhaltet diese Karte alle gesammelten Informationen über die kartierten Flächenbereiche sowohl der initialen Kartierungsfahrt als auch jeder weiteren Kartierungsfahrt. Flächenbereiche, die weder in einer initialen Kartierungsfahrt noch in einer weiteren Kartierungsfahrt des autonomen Roboterfahrzeugs kartiert werden können/konnten, werden in der Karte bevorzugt als Hindernis und/oder unkartierbare Flächenbereiche gekennzeichnet. Die auf diese Weise erstellte Karte, in der die Bearbeitungsfläche bevorzugt als Gesamtfläche der durch das Roboterfahrzeug kartierten Flächenbereiche erstellt wird, weist vorteilhaft eine theoretisch vollständige, d.h. flächendeckende, Abdeckung der Bearbeitungsfläche auf, aus der kartierte Bearbeitungsflächen sowie Hindernisse als unkartierbare Flächenbereiche hervorgehen.

In einer vorteilhaften Ausführungsform des erfindungsgemäßen Verfahrens zur Kartierung einer Bearbeitungsfläche findet während der initialen Kartierungsfahrt und/oder weiteren Kartierungsfahrten eine Bearbeitung der Bearbeitungsfläche statt.

Erfindungsgemäß kann somit vorteilhaft eine gleichzeitige Bearbeitung und Kartierung der Bearbeitungsfläche durchgeführt werden. Durch die Kombination der beiden Arbeitsschritte Kartierung und Bearbeitung der Bearbeitungsfläche lässt sich eine besonders effiziente und spontane Bearbeitung der Bearbeitungsfläche realisieren, die insbesondere ohne vorheriges Einlernen des Roboterfahrzeugs - und vorteilhaft ohne das Vorhandensein jeglicher die Bearbeitungsfläche betreffender Informationen - von einem beliebigem Ausgangspunkt des autonomen Roboterfahrzeugs auf der Bearbeitungsfläche aus durchführbar ist.

Beispielsweise kann vorteilhaft gleichzeitig zur Kartierung der Bearbeitungsfläche diese Bearbeitungsfläche bereits durch Kehren, Reinigen, Staubsaugen, Wischen, Feudeln, Mähen, Sähen, Düngen oder dergleichen durch einen autonomen Kehr-, Reinigungs-, Staubsauger-, Bodenwisch-, Rasenmäher-, Säh- bzw. Düngeroboter bearbeitet werden.

Vorteilhaft kann die auf diese Weise während der ersten Bearbeitung der Bearbeitungsfläche erzeugte Karte der Bearbeitungsfläche zur weiteren Verwendung der darin enthaltenen Informationen geräteintern zur Verfügung gestellt werden, besonders bevorzugt gespeichert werden.

In einer vorteilhaften Ausführungsform des erfindungsgemäßen Verfahrens zur Kartierung einer Bearbeitungsfläche wird die im Zuge der initialen Kartierungsfahrt und/oder weiteren Kartierungsfahrten erstellte Karte für die Navigation des Roboterfahrzeugs während nachfolgender Fahrten zur Bearbeitung der Bearbeitungsfläche verwendet.

Besonders vorteilhaft kann eine im Rahmen des Verfahrens zur Kartierung der Bearbeitungsfläche erstellte Karte mittels eines Speichermediums in dem autonomen Roboterfahrzeug oder extern gespeichert und zur weiteren Bearbeitung und/oder Nutzung geräteintern oder extern zur Verfügung gestellt werden. Dazu kann vorgesehen sein, die Karte mittels einer Speichervorrichtung in dem autonomen Roboterfahrzeug zu speichern. Vorteilhaft ist eine erneute und/oder wiederholte Kartierung der Bearbeitungsfläche im Rahmen erneuter Bearbeitung der Bearbeitungsfläche nicht nötig, da das autonome Roboterfahrzeug mittels der abgespeicherten Karte eine Navigation in der Bearbeitungsfläche durchführen kann. Besonders vorteilhaft kann mittels der gespeicherten Karte eine Verbesserung und/oder eine Optimierung des einer weiteren Bearbeitung der Bearbeitungsfläche zu Grunde liegenden Navigierverfahrens durchgeführt werden. Insbesondere lässt sich eine hinsichtlich Fahrtzeiten und/oder -wegen verbesserte Bearbeitungsstruktur der zu bearbeitenden Bearbeitungsfläche vorab berechnen und einer weiteren Navigation des Roboterfahrzeugs bei einer erneuten Bearbeitung der Bearbeitungsfläche zu Grunde legen. Folglich lässt sich eine besonders schnelle, effiziente und ökonomische Bearbeitung der Bearbeitungsfläche auf Grundlage der einmal erstellten Karte realisieren.

In einer alternativen oder zusätzlichen Ausführungsform kann die erstellte Karte mittels einer Datenkommunikationsvorrichtung auch an ein externes Gerät, beispielsweise zum Zweck der Bearbeitung, übertragen werden.

In einer vorteilhaften Ausführungsform des erfindungsgemäßen Verfahrens zur Kartierung einer Bearbeitungsfläche wird das Verfahren zur Kartierung bei jeder Fahrt des Roboterfahrzeugs, insbesondere jeder Fahrt zur Bearbeitung der Bearbeitungsfläche, ausgeführt.

In einer Ausführungsform des erfindungsgemäßen Verfahrens zur Kartierung ist eine effiziente und zuverlässige, insbesondere nahezu flächendeckende Bearbeitung der Bearbeitungsfläche bei jeder neu begonnenen Bearbeitungsfahrt realisierbar, die insbesondere ohne vorheriges Einlernen des Roboterfahrzeugs und vorteilhaft ohne das Vorhandensein jeglicher die Bearbeitungsfläche betreffender Informationen durchführbar ist.

Insbesondere ist die Durchführung der Bearbeitung der Bearbeitungsfläche erfindungsgemäß unabhängig von der Ausgangsposition des autonomen Roboterfahrzeugs zu Beginn der Bearbeitung sowie unabhängig von der Vorzugsfahrtrichtung, unter der die Bearbeitung der Bearbeitungsfläche in insbesondere parallelen Bahnen erfolgt. Eine Durchführung des Verfahrens zur Kartierung der zu bearbeitenden Bearbeitungsfläche bei jeder Fahrt des Roboterfahrzeugs, insbesondere jeder Bearbeitungsfahrt, ist bevorzugt dann sinnvoll, wenn die Genauigkeit der Positionsermittlung des autonomen Roboterfahrzeugs bezüglich der Bearbeitungsfläche nicht zulässt, dass unter Verwendung einer einmal erzeugten Karte der Bearbeitungsfläche fortwährend eine zuverlässige Navigation des Roboterfahrzeugs auf der Bearbeitungsfläche sichergestellt werden kann. Insbesondere braucht in dieser Ausführungsform keine Abspeicherung der erstellten Karte vorgesehen zu sein.

In einer weiteren Ausführungsform des erfindungsgemäßen Verfahrens zur Kartierung der Bearbeitungsfläche kann eine wiederholte Ausführung des Verfahrens bei jeder Fahrt dazu genutzt werden, einmal gesammelte Informationen vorteilhaft zu bestätigen, zu erweitern, zu korrigieren, zu präzisieren und/oder zu wiederlegen, sodass eine einmal erstellte Karte im Rahmen weiterer Fahrten des Roboterfahrzeugs aktualisiert wird. Diese Ausführungsform setzt eine ausreichend zuverlässige und genaue Positionsermittlung des autonomen Roboterfahrzeugs bezüglich der Bearbeitungsfläche voraus.

Erfindungsgemäß wird auch eine Kartierungs- und/oder Navigationsvorrichtung zur Verwendung in einem autonomen Roboterfahrzeug zur Ausführung eines Verfahrens zur Kartierung einer Bearbeitungsfläche, insbesondere zur Bestimmung einer Bearbeitungsfläche, vorgeschlagen, die zumindest
- eine Recheneinheit,
- eine Antriebseinheit zur Bewegung des Roboterfahrzeugs und
- eine Vorrichtung zur Ermittlung von Positions- und/oder Odometriedaten aufweist
und dadurch gekennzeichnet ist, dass
- die Recheneinheit Grenzlinien zwischen aneinander angrenzenden kartierten und unkartierten Flächenbereichen der zu kartierenden Bearbeitungsfläche durch Vergleich von von der Vorrichtung zur Ermittlung von Positions- und/oder Odometriedaten erhaltenen zurückgelegten Streckenlängen des auf einer initialen Kartierungsfahrt die Bearbeitungsfläche befahrenen Roboterfahrzeugs identifiziert,
- die Antriebseinheit dazu vorgesehen ist, einen Punkt auf einer identifizierten Grenzlinie anzufahren, um eine Kartierung eines an die Grenzlinie angrenzenden unkartierten Flächenbereichs im Rahmen einer weiteren Kartierungsfahrt des Roboterfahrzeugs in den unkartierten Flächenbereich durchzuführen und
- die Recheneinheit eine Karte der Bearbeitungsfläche auf Grundlage der durch das Roboterfahrzeug kartierten Flächenbereiche erstellt.

Unter der Recheneinheit soll zumindest eine Vorrichtung verstanden werden, die einen Informationseingang zur Annahme von Informationen, eine Informationsverarbeitungseinheit zur Bearbeitung, insbesondere zur Berechnung von Informationen, sowie eine Informationsausgabe zur Weitergabe der bearbeiteten und/oder berechneten Informationen aufweist. Vorteilhaft weist die Recheneinheit Komponenten auf, die zumindest einen Prozessor, einen Speicher und ein Betriebsprogramm mit Auswerte- und Berechnungsroutinen umfassen. Vorteilhaft können die elektronischen Bauteile der Recheneinheit auf einer Platine angeordnet sein, bevorzugt auf einer gemeinsamen Platine mit einer Steuervorrichtung der Kartierungs- und/oder Navigationsvorrichtung zur Steuerung des autonomen Roboterfahrzeugs und besonders bevorzugt in Form eines Mikrocontrollers. Insbesondere können die Steuervorrichtung und die Recheneinheit besonders bevorzugt auch als ein einzelnes Bauteil ausgeführt sein. Die Recheneinheit ist vorgesehen, Informationen betreffend einer Position des autonomen Roboterfahrzeugs bezüglich der Bearbeitungsfläche sowie für die Erstellung einer Karte relevante Informationen von einer Sensorvorrichtung zu erhalten, zu verarbeiten, insbesondere auszuwerten, weiterzugeben und gegebenenfalls auch zu speichern. Insbesondere ist die Recheneinheit vorgesehen, einen Vergleich von von der Vorrichtung zur Ermittlung von Positions- und/oder Odometriedaten erhaltenen zurückgelegten Streckenlängen des autonomen Roboterfahrzeugs durchzuführen und basierend auf diesem Vergleich Grenzlinien zwischen aneinander angrenzenden kartierten und unkartierten Flächenbereichen der Bearbeitungsfläche zu identifizieren. Ferner ist die Recheneinheit dazu vorgesehen, eine Karte der Bearbeitungsfläche auf Grundlage der durch das Roboterfahrzeug kartierten Flächenbereiche, insbesondere unter Verwendung während der Kartierung gesammelter Informationen, zu erstellen.

Erfindungsgemäß weist die Kartierungs- und/oder Navigationsvorrichtung zumindest eine Sensorvorrichtung auf, über welche eine Detektion von für die Erstellung einer Karte relevanten Informationen, insbesondere für das Navigationsverfahren relevante Informationen betreffend die Bearbeitungsfläche, stattfindet. Unter einer Sensorvorrichtung soll in diesem Zusammenhang insbesondere eine Vorrichtung verstanden werden, die dazu vorgesehen ist, zumindest eine Kenngröße und/oder eine Information und/oder eine physikalische Eigenschaft aufzunehmen, wobei die Aufnahme aktiv, wie insbesondere durch das Erzeugen, Aussenden und Erfassen eines Messsignals, und/oder passiv, wie insbesondere durch eine Erfassung von Eigenschaftsänderungen eines Sensorbauteils, stattfinden kann. Es sind verschiedene, einem Fachmann als sinnvoll erscheinende Sensorvorrichtungen denkbar, die insbesondere beispielsweise optische Sensoren, insbesondere fotografische Sensoren, akustische Sensoren, insbesondere Ultraschallsensoren, oder auch neigungs-, abstands-, translations-, beschleunigungs-, rotations-, berührungs-, induktions-, kapazitäts-, temperatur-, feuchte-, strahlungs-, chemosensitive Sensoren oder dergleichen umfassen können. Zumindest weist die Sensorvorrichtung Sensoren zur Detektion eines Hindernisses und/oder einer Begrenzung der Bearbeitungsfläche auf.

Daneben weist die Kartierungs- und/oder Navigationsvorrichtung eine Vorrichtung zur Ermittlung von Positions- und/oder Odometriedaten des autonomen Roboterfahrzeugs auf. Diese Vorrichtung dient der Ermittlung von Positions- und/oder Odometriedaten, die zur Korrelation von für die Erstellung der Karte relevanten Informationen mit der Position des autonomen Roboterfahrzeugs bezüglich der zu kartierenden Bearbeitungsfläche notwendig und/oder sinnvoll sind.

Die Vorrichtung zur Ermittlung von Positions- und/oder Odometriedaten kann dazu insbesondere einen oder mehrere Sensoren aus einer Gruppe von Sensoren aufweisen, die zumindest neigungs-, winkel-, abstands-, translations-, beschleunigungs- sowie drehratensensitive Sensoren umfasst. Beispielsweise und bevorzugt lässt sich die Vorrichtung zur Ermittlung von Positions- und/oder Odometriedaten unter Verwendung von zum Antrieb des Roboterfahrzeugs verwendeten Antriebsmitteln realisieren. Beispielsweise lassen sich insbesondere Drehungen von Wälzkörpern, Rädern, Ketten oder dergleichen, die sich beim Verfahren des Roboterfahrzeugs bezogen auf die Bearbeitungsfläche drehen, zur Bestimmung einer Positionsänderung und/oder Odometrieänderung auswerten. Insbesondere ist die Vorrichtung zur Ermittlung von Positions- und/oder Odometriedaten, eventuell in Kombination mit der Recheneinheit, dazu ausgelegt, zurückgelegte Streckenlänge in Fahrtrichtung des sich auf einer Bahn bewegenden Roboterfahrzeugs, bevorzugt auch einen zurückgelegten Fahrwinkel auf der Bahn, zu ermittelt. Alternativ oder zusätzlich kann die Vorrichtung auch weitere Sensoren zur Ermittlung von Positionsdaten umfassen. Bevorzugt kann eine Positionsbestimmung auch unter Verwendung von GPS-, Echo-, Sonar-, Entfernungs-, Ultraschall-Sensoren oder anderen, einem Fachmann als sinnvoll erscheinenden Sensoren zur Ermittlung von Positions- und/oder Odometriedaten, realisiert werden.

Die Antriebseinheit der Kartierungs- und/oder Navigationsvorrichtung des autonomen Roboterfahrzeugs dient der Fortbewegung des autonomen Roboterfahrzeugs relativ zur Bearbeitungsfläche. Insbesondere ist die Antriebseinheit ausgelegt, mittels Steuerung und/oder Regelung von typischerweise Motoren zur Fortbewegung vorgesehene Räder, Walzen, Ketten oder andere einem Fachmann als sinnvoll erscheinende Fortbewegungsmittel anzutreiben und somit eine Bewegung, insbesondere eine Richtungsänderung und eine Fahrt, des Roboterfahrzeugs zu ermöglichen. Die Antriebseinheit ist ferner vorgesehen, mit der Navigationsvorrichtung zu kommunizieren und vorteilhaft eine Richtung und eine Distanz von dieser zu erhalten, in der die Bewegung des Roboterfahrzeugs zu erfolgen hat. Auf diese Weise lassen sich insbesondere Punkte auf identifizierten Grenzlinien direkt anfahren, um eine Kartierung eines an die jeweilige Grenzlinie angrenzenden unkartierten Flächenbereichs im Rahmen einer weiteren Kartierungsfahrt durchzuführen.

Des Weiteren wird erfindungsgemäß ein autonomes Roboterfahrzeug vorgeschlagen, das zumindest eine Kartierungs- und/oder Navigationsvorrichtung zur Ausführung eines Verfahrens zur Kartierung einer Bearbeitungsfläche, insbesondere zur Bestimmung einer Bearbeitungsfläche, aufweist.

Insbesondere kann das autonome Roboterfahrzeug als eine autonome Kehrmaschine, ein autonomer Reinigungsroboter, ein autonomer Schneeräumroboter, ein autonomer Staubsauger, eine autonome Schwimmbadreinigungsmaschine, ein autonomer Bodenwischroboter, ein autonomer Rasenmäher, eine autonome Sähmaschinen, eine autonome Düngemaschinen, eine autonome Kartierungsmaschinen oder eine andere, dem Fachmann sinnvoll erscheinende Ausführungsform eines autonomen Roboterfahrzeugs realisiert sein.

### Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreicher Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine Ausführungsform eines erfindungsgemäßen autonomen Roboterfahrzeugs in einer perspektivischen, schematischen Darstellung.
- Figur 2: ein Ablaufdiagramm einer Ausführungsform des erfindungsgemäßen Verfahrens zur Kartierung einer Bearbeitungsfläche,
- Figur 3a-e: eine schematische Darstellung eines Systems bestehend aus einem autonomen Roboterfahrzeug sowie einer zu kartierenden, Hindernisse aufweisenden Bearbeitungsfläche zu fünf verschiedenen Zeitpunkten im Verlauf der Ausführung einer Ausführungsform des erfindungsgemäßen Verfahrens,
- Figur 4: eine schematische Darstellung eines Systems bestehend aus einem autonomen Roboterfahrzeug und einer zu kartierenden, ein Hindernis aufweisenden Bearbeitungsfläche sowie Grenzlinien, die aufgrund Erreichens einer maximal zurückzulegenden Streckenlänge des Roboterfahrzeugs auf einer Bahn identifiziert wurden.

### Beschreibung der Ausführungsbeispiele

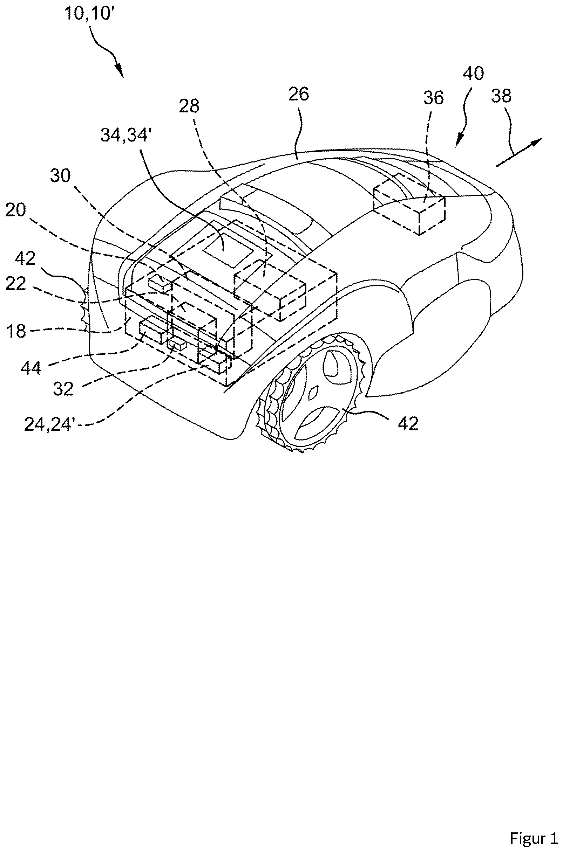

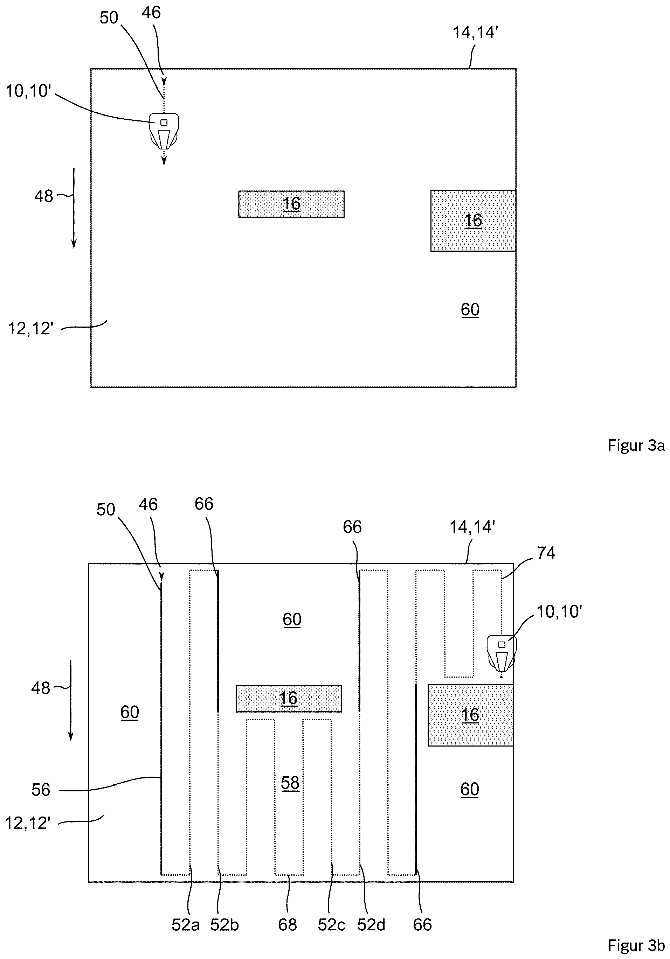

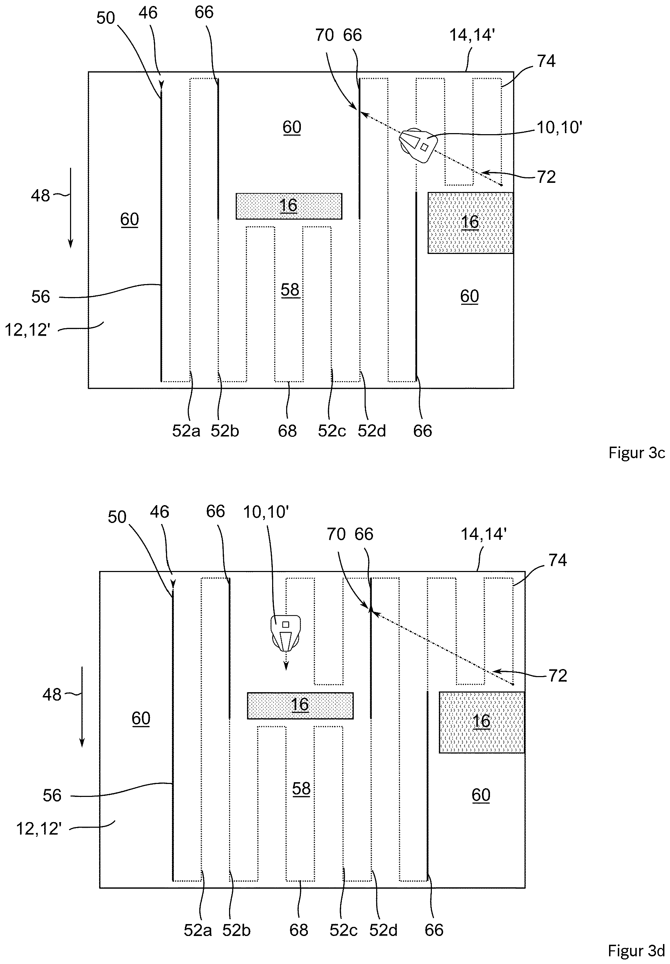

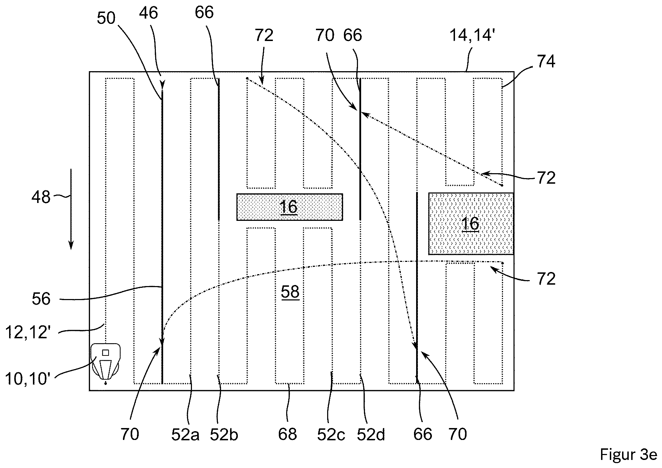

Figur 1 zeigt eine Ausführungsform eines autonomen mobilen Roboterfahrzeugs 10, wie es beispielsweise als ein autonomer Rasenmäher 10' realisiert sein kann, dessen zu bearbeitende Bearbeitungsfläche 12 aus einer Wiese oder einer Rasenfläche 12' eines Gartens besteht (vgl. Figur 3), die insbesondere eine Begrenzung 14 der Bearbeitungsfläche (z.B. Gartengrenze) sowie Hindernisse 16 (beispielsweise Gegenstände auf der Wiese, Beete oder dergleichen) aufweist. Die im Folgenden beschriebenen Grundsätze sind im Rahmen anderer Ausführungsbeispiele auch auf andere Ausführungen des Roboterfahrzeugs 10 übertragbar, die andere, vielfältige Aufgabe erfüllen können, beispielsweise als Staubsaugerroboter, Kehrroboter, Reinigungsroboter, Schneeräumroboter, Bodenwischroboter, insbesondere aber auch lediglich als Kartierungsroboter ohne weitere Bearbeitungsfunktion. Je nach Aufgabe und Einsatzort des Roboterfahrzeugs 10 kann der Bearbeitungsbereich 12 beispielsweise auch aus einem durch Mauern begrenzten Innen- oder Außenraum bestehen.

Das autonome Roboterfahrzeug 10 in Figur 1 in der beispielhaften Ausführungsform eines autonomen Rasenmäher 10' weist eine Steuer- und Regeleinheit 18 auf. Die Steuer- und Regeleinheit 18 weist ferner eine Speichereinheit 20, eine Recheneinheit 22 sowie eine Datenkommunikationsschnittstelle 24 zur Datenübertragung auf. Die Steuer- und Regeleinheit 18 ist samt ihren Komponenten zumindest teilweise in einem Gehäuse 26 des autonomen Rasenmähers 10' angeordnet. Die Datenkommunikationsschnittstelle 24 der Steuer- und Regeleinheit 18 ist unter anderem dazu vorgesehen, eine auf einer Kartierungsfahrt erzeugte Karte einer Bearbeitungsfläche 12, hier der Wiese 12', auf die Speichereinheit 20 zu übertragen und/oder eine gespeicherte Karte von der Speichereinheit 20 auszulesen. Die Datenkommunikationsschnittstelle 24 zur Datenübertragung kann insbesondere drahtlos oder kabelgebunden realisiert sein. Alternativ kann die Datenkommunikationsschnittstelle 24 auch als eine Laufwerkschnittstelle gebildet sein, sowie eine weitere zusätzliche Datenkommunikationsschnittstelle 24' zur Datenübertragung an externe Geräte, beispielsweise Tablets, Smartphones, Computer, weitere Roboterfahrzeuge oder dergleichen, aufweisen.

Die Steuer- und Regeleinheit 18 weist ferner eine Steuerungsvorrichtung 28 auf. Die Steuerungsvorrichtung 28 ist dazu vorgesehen, das erfindungsgemäße Kartierungsverfahren sowie ein Navigierverfahren des autonomen Rasenmähers 10' durchzuführen und in dessen Rahmen eine Navigation des autonomen Rasenmähers 10' unter Verwendung der Antriebseinheit 30 zur Bewegung des Roboterfahrzeugs 10 zu realisieren. Insbesondere ist die Steuerungsvorrichtung 28 dazu vorgesehen, eine Karte der Bearbeitungsfläche 12 im Rahmen des Verfahrens zur Kartierung zu erstellen und ferner in Verbindung mit der Datenkommunikationsschnittstelle 24 zu speichern, eine auf der Speichereinheit 20 gespeicherte Karte zu laden, auszulesen und zu interpretieren.

Vorteilhaft weist die Steuer- und Regeleinheit 18 einen Prozessor 32 auf, der auch Bestandteil der Steuerungsvorrichtung 28 oder der Recheneinheit 22 sein kann.

Desweiteren weist die Steuer- und Regeleinheit 18 eine Benutzerschnittstelle 34 auf, über die Informationen an einen Bediener ausgegeben werden können oder Informationen von einem Bediener eingegeben werden können. Insbesondere ist die Ausgabeeinheit 34 von einem Touch-Display 34' gebildet.

Das autonome Roboterfahrzeug 10 in Form des autonomen Rasenmähers 10' weist eine Sensoreinheit 36 auf, die zumindest dazu vorgesehen ist, Hindernisse 16 und/oder Begrenzungen 14 der Bearbeitungsfläche 12 (vgl. Figur 3) zu detektieren. Die Sensoreinheit 36 ist dazu vorgesehen, bei einer Detektion eines Hindernisses 16 und/oder einer Begrenzung 14 der Bearbeitungsfläche 12 ein Signal an die Steuer- und Regeleinheit 18 auszugeben, die wiederum dazu vorgesehen ist, die entsprechende Position des Hindernisses 16 und/oder der Begrenzung 14 zur Erstellung der Karte der Bearbeitungsfläche 12 zu verwenden. Die Sensoreinheit 36 ist vorzugsweise innerhalb des Gehäuses 26 des autonomen Roboterfahrzeugs 10 angeordnet. Insbesondere ist die Sensoreinheit 36 entlang der Fahrtrichtung 38 des autonomen Roboterfahrzeugs 10 betrachtet in einem vorderen Bereich 40 des autonomen Roboterfahrzeugs 10 angeordnet. Zur Detektion sowohl der Hindernisse 16 als auch der Begrenzung 14 der Bearbeitungsfläche 12 weist die Sensoreinheit 36 speziell ausgebildete Sensoren auf, insbesondere beispielsweise einen berührungsempfindlichen Sensor sowie einen magnetfeldsensitiven Sensor, der es erlaubt, ein Magnetfeld zu detektieren, das mittels eines die Bearbeitungsfläche 12 einfassenden, stromdurchflossenen Drahts 14' (vgl. Figur 3) erzeugt wird.

In einer alternativen Ausführungsform des erfindungsgemäßen Roboterfahrzeugs 10 kann eine Detektion der Begrenzungen 14 der Bearbeitungsfläche 12 auch auf andere Weise realisiert sein, beispielsweise unter Verwendung weiterer und/oder alternativer Sensoren, die Abhängig vom Einsatzumfeld des autonomen Roboterfahrzeug 10 eine Begrenzung 14 der Bearbeitungsfläche 12 sicherstellen. Insbesondere kann beispielsweise bei einem autonomen Rasenmäher 10' ein Sensor zur Rasenerkennung vorgesehen sein, der auf Basis kapazitiver, optischer, photometrischer, induktiver oder anderer einem Fachmann sinnvoll erscheinender messbarer Effekte eine Erkennung der Rasenbegrenzung durchführt. Ferner kann die Sensoreinheit 36 weitere Bestandteile, beispielsweise einen optischen Sensor, einen Feuchtesensor, einen kapazitiven Sensor, einen weiteren Magnetfeldsensor oder einen beliebigen anderen, einem Fachmann sinnvoll erscheinenden Sensor aufweisen. Diese weiteren Bestandteile, insbesondere Sensoren, finden sich vorzugsweise ebenfalls im vorderen Bereich 40 des autonomen Roboterfahrzeugs 10.

Zur Fortbewegung weist das autonome Roboterfahrzeug 10, insbesondere der autonome Rasenmäher 10', Räder 42 auf, die dem Antrieb und der Richtungsänderung des Roboterfahrzeugs 10 dienen. Die Räder 42 sind mit einem Motor (hier nicht dargestellt) gekoppelt und können mittels der Antriebseinheit 30 zur Bewegung des Roboterfahrzeugs 10 gesteuert und bewegt werden.

Eine Energieversorgungsvorrichtung (hier nicht dargestellt) des autonomen Roboterfahrzeugs 10 ist dazu vorgesehen, das Roboterfahrzeug 10 zur Inbetriebnahme und während des Betriebs mit elektrischer Energie zu versorgen. Bevorzugt handelt es sich bei dieser Vorrichtung um einen stromnetzunabhängigen Energiespeicher, insbesondere einen Akkumulator, eine Batterie, eine Brennstoffzelle, einen Kondensator, einen anderweitigen, dem Fachmann sinnvoll erscheinenden Energiespeicher oder eine Kombination/Mehrung derer. Besonders bevorzugt lässt sich die Energieversorgungsvorrichtung zur Energieversorgung in und/oder außerhalb des autonomen Roboterfahrzeugs 10 wieder mit Energie aus einem Stromnetz versorgen und laden.

Die Steuer- und Regeleinheit 18 des Roboterfahrzeugs 10 weist weiterhin eine Vorrichtung zur Ermittlung von Positions- und/oder Odometriedaten 44 auf, die bevorzugt unmittelbar mit der Antriebseinheit 30 zur Bewegung des Roboterfahrzeugs kommuniziert. Mittels dieser Vorrichtung 44 lassen sich aus der Bewegung, insbesondere in Folge einer Vermessung der Drehung der Räder 42, Rückschlüsse auf die zurückgelegte Streckenlänge des Roboterfahrzeugs 10 ziehen. Ebenfalls detektiert die Vorrichtung zur Ermittlung von Positions- und/oder Odometriedaten 44 Winkeländerungen zwischen zurückgelegten Bahnen. Aus diesen Winkeln und zurückgelegten Streckenlängen werden Koordinaten des autonomen Roboterfahrzeugs 10 bezüglich der Bearbeitungsfläche 12 ermittelt. Diese Koordinaten dienen der Zuordnung von die Bearbeitungsfläche 12 betreffenden Informationen zu Positionen des Roboterfahrzeugs 10 in der zu erstellenden Karte.

Die Gesamtheit der Komponenten bestehend aus Recheneinheit 22, Antriebseinheit 30 zur Bewegung des Roboterfahrzeugs 10 und Vorrichtung zur Ermittlung von Positions- und/oder Odometriedaten 44 kann insbesondere als Kartierungs- und Navigationsvorrichtung zusammengefasst werden.

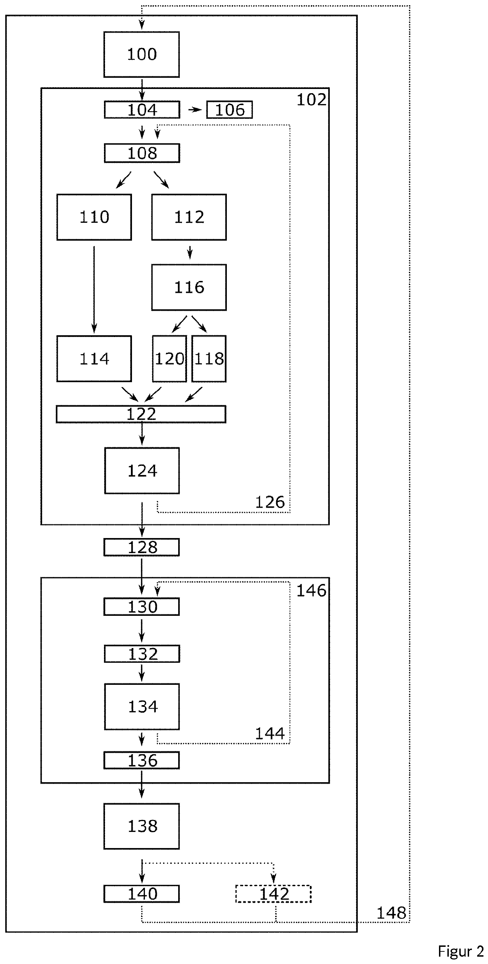

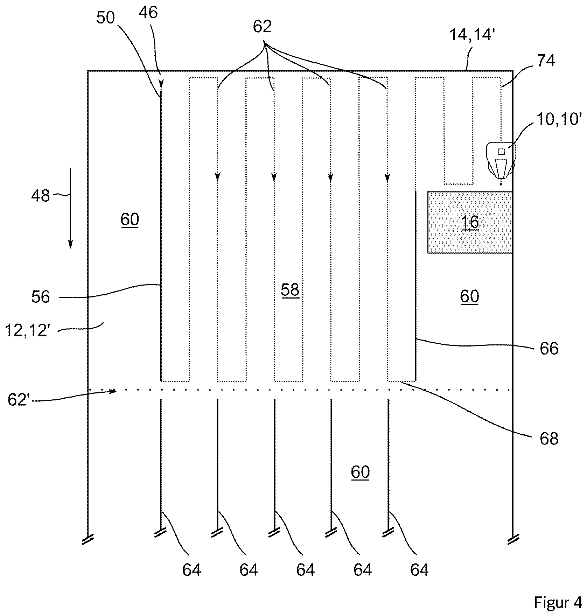

Figur 2 zeigt ein Ablaufdiagramm einer beispielhaften Ausführungsform des erfindungsgemäßen Verfahrens zur Kartierung einer Bearbeitungsfläche 12, das in Figur 3 anhand eines Ausführungsbeispiels schematisch erläutert wird. Beginnend mit dem Verlassen der Basisstation oder des Ausgangsstandortes 46 des autonomen Roboterfahrzeugs 10 auf einer Bearbeitungsfläche 12 in Verfahrensschritt 100 beginnt das autonome Roboterfahrzeug 10, hier am Beispiel des autonomen Rasenmähers 10' aus Figur 1, seine initiale Kartierungsfahrt (Verfahrensblock 102) mittels geradliniger Fahrt auf einer ersten Bahn 50 in einer Vorzugsfahrtrichtung 48 (vgl. Figur 3a) zufälliger Richtung. "Vorzugsfahrtrichtung 48 zufälliger Richtung" meint insbesondere, dass die Vorzugsfahrtrichtung 48, in der das autonome Roboterfahrzeug 10 parallel ausgerichtete Bahnen 52 abfährt, zwar während der initialen Kartierungsfahrt im Wesentlichen konstant bleibt, die Ausrichtung der Vorzugsfahrtrichtung 48 bezogen auf die Bearbeitungsfläche 12 jedoch mit Beginn der initialen Kartierungsfahrt zufällig gewählt wird und sich insbesondere bei jeder erneuten initialen Kartierung der Bearbeitungsfläche 12 unterscheiden kann. Die Geradeausfahrt des Roboterfahrzeugs 10 auf der ersten Bahn 50 (vgl. Figur 3b) ist in Verfahrensschritt 104 dargestellt. Der auf der initialen Kartierungsfahrt zuerst zurückgelegten Bahn 50 wird eine Grenzlinie 56 zugewiesen, die der Streckenlänge der ersten zurückgelegten Bahn 50 entspricht. Dies geschieht in Verfahrensschritt 106. Mit Beginn der initialen Kartierungsfahrt wird mittels der Vorrichtung zur Ermittlung von Positions- und/oder Odometriedaten 44 eine Veränderung der Position des Roboterfahrzeugs 10, insbesondere in Form einer Änderung der Positionskoordinaten des autonomen Roboterfahrzeugs 10 bezogen auf die Bearbeitungsfläche 12, gemessen. Insbesondere werden Posititions- und/oder Odometriedaten in Koordinaten umgewandelt, die in einer Karte wiedergegeben werden und somit die zurückgelegten Bahnen 52 des autonomen Roboterfahrzeugs 10 in der Karte darstellen (Verfahrensschritt 108). Während einer Geradeausfahrt kann das autonome Roboterfahrzeug 10 entweder eine maximal zurückzulegende Streckenlänge 62 (vgl. Figur 4) erreichen (Verfahrensschritt 110) oder mittels der Sensoreinheit 36 ein Hindernis 16 oder eine Begrenzung 14 der Bearbeitungsflächen 12 detektieren (Verfahrensschritt 112). Im ersten Fall wird in dem an die Bahn angrenzenden unkartierten Bereich 60 in Verfahrensschritt 114 eine in Verlängerung der zurückgelegten Bahn 62 liegende Grenzlinie 64 definiert (vgl. Figur 4, mit Pfeil in Fahrtrichtung markierte Bahnen). Im zweiten Fall führt die Recheneinheit 22 einen Vergleich von Streckenlängen nebeneinander liegender Bahnen 52a,52b (vgl. Figur 3b) durch (Verfahrensschritt 116). Sofern keine Differenz besteht (Verfahrensschritt 118), wird keine Grenzlinie 66 identifiziert. Andernfalls weist die Recheneinheit 22 eine Grenzlinie 66 demjenigen Teil der längeren zurückgelegten Bahn 52d zu, der im Vergleich über die kürzere Bahn 52c hinausragt (Verfahrensschritt 120). In beiden Fällen werden die Positionsinformationen, insbesondere die zur Ortsbestimmung der Grenzlinien 66 benötigten Parameter, gespeichert und somit die zu erstellende Karte aktualisiert (Verfahrensschritt 122). Im ersten Fall sind die Positionsinformationen Parameter der Grenzlinie 64, die durch eine Positionskoordinate des Startwertes sowie eine Winkelangabe, die die Richtung der Grenzlinie 64 in dem unkartierten Bereich 60 definiert, gebildet sind. Im zweiten Fall werden hierfür zwei Koordinaten, die den Anfangs- sowie den Endpunkt der Grenzlinie 66 definieren, verwendet. Anschließend führt das autonome Roboterfahrzeug 10 eine 180°-Wende 68 verbunden mit einem lateralen Versatz, der einer Roboterbreite entspricht, aus und beginnt eine Geradeausfahrt auf der folgenden Bahn (Verfahrensschritt 124). Die Verfahrensschritte 108 bis 124 wiederholen sich beim Befahren jeder neuen Bahn durch das autonome Roboterfahrzeug 10 auf seiner initialen Kartierungsfahrt. Dies ist in dem Ablaufdiagramm der Figur 2 mit Verfahrensschritt 126 dargestellt. Das Roboterfahrzeug 10 fährt demnach die im wesentlichen parallelen Bahnen 52 der zu kartierenden Bearbeitungsfläche 12 unter Vergleich (Verfahrensschritt 116) von von einer Vorrichtung zur Ermittlung von Positions- und/oder Odometriedaten 44 gelieferten Streckenlängen ab, identifiziert basierend auf diesem Vergleich (Verfahrensschritt 116) der Streckenlängen Grenzlinien 66 zwischen aneinander angrenzenden kartierten 58 und unkartierten 60 Flächenbereichen, bis das autonome Roboterfahrzeug 10 keine weitere Bahn mehr mittels einer 180°-Wende 68 (Verfahrensschritt 124) erreichen kann (vgl. Figur 3b). An dieser Stelle ist mit Abschluss der letzten befahrbaren Bahn 74 auf der initialen Kartierungsfahrt die initiale Kartierungsfahrt abgeschlossen (Verfahrensschritt 128). Mit Ende der initialen Kartierungsfahrt geht das Verfahren zur Kartierung einer Bearbeitungsfläche 12 in einen zweiten Abschnitt über.

In Verfahrensschritt 130 wird durch die Recheneinheit 22 ein Punkt 70 auf einer identifizierten Grenzlinie 66,64,56 (vgl. Figur 3c) ausgewählt und anschließend unter Verwendung der gespeicherten und/oder berechneten Koordinaten durch die Antriebseinheit 30 des Roboterfahrzeugs 10 in einer Transferfahrt 72 (Verfahrensschritt 132) angefahren. In diesem Ausführungsbeispiel wird eine Bearbeitung der zu bearbeitenden Bearbeitungsfläche 12 während der Transferfahrt 72, d.h. ein Mähen während der Transferfahrt 72, ausgesetzt. Ist dieser Punkt 70 auf einer identifizierten Grenzlinie 66,64,56 erreicht, wird eine weitere Kartierungsfahrt des autonomen Roboterfahrzeugs 10 in den unmittelbar an die Grenzlinie 66,64,56 angrenzenden unkartierten Flächenbereich 60 gestartet. Das daraufhin initiierte Kartieren des unkartierten Flächenbereichs 60 entspricht einer Kartierung wie sie im Rahmen der initialen Kartierungsfahrt (Verfahrensblock 102) in den Verfahrensschritten 104 bis 126 beschrieben wurde. Eine Wiederholung dieser Verfahrensschritte wird in Verfahrensschritt 134 zusammengefasst. Ist der an die Grenzlinie 66,64,56 angrenzende ursprünglich unkartierte Flächenbereich 60 kartiert, so wiederholt sich die Prozedur, d.h. Verfahrensschritt 130, Auswählen eines Punktes 70 auf einer Grenzlinie 66,64,56, Verfahrensschritt 132, Transferfahrt 72 des autonomen Roboterfahrzeugs 10 zu diesem Punkt 70, sowie Verfahrensschritt 134, Kartierung des an die Grenzlinie 66,64,56 angrenzenden unkartierten Flächenbereichs 60 mittels einer weiteren Kartierungsfahrt (zusammengefasst in Verfahrensschritt 144).

Ist die letzte Bahn 74 der letzten weiteren Kartierungsfahrt beendet (Verfahrensschritt 136), so kehrt das autonome Roboterfahrzeug 10 zu seiner Basisstation oder seinem Ausgangsstandort 46 zurück (Verfahrensschritt 138). In dem dargestellten Ausführungsbeispiel wurde eine Bearbeitung der zu bearbeitenden Fläche bereits während der gesamten Kartierung durchgeführt sowie im Anschluss an das Erreichen der Basisstation 46 (Verfahrensschritt 138) die erstellte Karte gelöscht (Verfahrensschritt 140). Das erfindungsgemäße Verfahren wird dann erneut ausgeführt (dargestellt durch Verfahrensschritt 148), wenn das Roboterfahrzeug erneut zur Bearbeitung und/oder Kartierung die Basisstation 46 verlässt.

In einer alternativen Ausführungsform des erfindungsgemäßen Verfahrens ist es auch möglich, dass die erstellte Karte nach Erreichen der Basisstation 46 (Verfahrensschritt 138) gespeichert wird und/oder der Recheneinheit 22 zur Optimierung von zurückzulegenden Fahrstrecken zur Verfügung gestellt wird (alternativer Verfahrensschritt 142). Auf diese Weise lassen sich insbesondere besonders effiziente und zeitlich besonders schnelle und/oder kurze Pfade zwischen Transferfahrten 72 zwischen zu bearbeitenden Flächenbereichen bestimmen, die einer weiteren Bearbeitung der Fläche zugrunde gelegt werden können. Dies ist insbesondere dann von Vorteil, wenn die Karte als Grundlage weiterer Bearbeitungsfahrten des autonomen Roboterfahrzeugs 10 gespeichert wird und bei der nächsten Fahrt zur Bearbeitung der Bearbeitungsfläche 12 durch die Steuer- und Regeleinheit 18 geladen und im Rahmen des Navigierverfahrens verwendet wird. Besonders vorteilhaft ist auch denkbar, dass die erstellte Karte auf weiteren Fahrten des autonomen Roboterfahrzeugs 10, insbesondere Bearbeitungsfahrten zur Bearbeitung der Fläche 12, durch wiederholtes Ausführen des erfindungsgemäßen Verfahrens weiterhin ergänzt und/oder modifiziert wird (ebenfalls angedeutet in Verfahrensschritt 148).

Figur 3 zeigt schematische Aufsichten a-e auf eine zu bearbeitende Bearbeitungsfläche 12, auf der sich das autonome Roboterfahrzeug 10, insbesondere der autonome Rasenmäher 10', befindet und fortbewegt, die jeweils verschiedenen Zeitpunkten des in Figur 2 dargestellten, beispielhaften Verfahrens zugeordnet werden können.

In Figur 3a befindet sich das autonome Roboterfahrzeug 10, insbesondere der autonome Rasenmäher 10', in Vorwärtsrichtung auf seiner ersten Bahn 50 der initialen Kartierungsfahrt (Verfahrensblock 102). Auf der zu bearbeitenden Fläche 12, insbesondere einer Wiese 12', befinden sich zwei Hindernisse 16. Die zu bearbeitende Bearbeitungsfläche 12 ist in ihrer Ausdehnung räumlich durch eine Begrenzung 14 begrenzt, die insbesondere durch einen Begrenzungsdraht 14' definiert ist. In einer alternativen Ausführungsform kann diese Begrenzung 14 auch anderweitig realisiert sein, beispielsweise durch einen Übergang von Gras der Wiese 12' zu einem anderen Material außerhalb der Bearbeitungsfläche 12. Ferner ist in Figur 3a noch der Ausgangsstandort 46, beispielsweise in Form einer Basisstation, angedeutet. Die Vorwärtsrichtung des Roboterfahrzeugs kennzeichnet die Vorzugsfahrtrichtung 48. Nach Erreichen des Endes der ersten Bahn 50 der initialen Kartierungsfahrt wird der ersten Bahn 50 auf deren gesamten Länge eine Grenzlinie 56 zugewiesen (Verfahrensschritt 106). Auf diese Weise wird sichergestellt, dass derjenige Flächenbereich 60 der zu kartierenden Bearbeitungsfläche 12, der bei der ersten Wende 68 des Roboterfahrzeugs 10 in die folgende, insbesondere parallele, Bahn nicht angefahren wird, nach Abschluss der initialen Kartierungsfahrt in einer weiteren Kartierungsfahrt kartiert werden kann.

Figur 3b zeigt die gleiche Aufsicht auf die Bearbeitungsfläche 12 zu einem späteren Zeitpunkt während des initialen Kartierungsverfahrens (Verfahrensblock 102). Während dieser initialen Kartierungsfahrt (Verfahrensblock 102) legt das autonome Roboterfahrzeug 10 geradlinige und im Wesentlichen parallele Bahnen 52 mit 180°-Wenden 68 an deren Enden zurück. Die Längen der auf den Bahnen 52 durch das Roboterfahrzeug 10 zurückgelegten Strecken, insbesondere nebeneinanderliegenden Bahnen 52a,52b, variiert in Abhängigkeit eines Vorhandenseins von Hindernissen 16 auf den entsprechenden Bahnen (z.B. 52c, 52d). Folglich lassen sich der Figur 3b Bahnen 52d entnehmen, deren Streckenlängen durch die Begrenzung 14 der Bearbeitungsfläche 12 limitiert ist, oder Bahnen 52c, deren Streckenlänge durch das Vorhandensein eines Hindernisses 16 limitiert ist. Das erfindungsgemäße Verfahren zur Kartierung sieht vor, dass Grenzlinien 66 zwischen aneinander angrenzenden kartierten 58 und unkartierten 60 Flächenbereichen durch Vergleich zurückgelegter Streckenlängen (Verfahrensschritt 116) von nebeneinanderliegenden Bahnen 52a,52b identifiziert werden. Diese Grenzlinien 66 sind dabei demjenigen Streckenteil der längeren Bahn 52d zugeordnet, der über den kürzeren Streckenteil 52c der benachbarten Bahn hinausragt. Nach befahren der letzten Bahn 74 der initialen Kartierungsfahrt (Verfahrensschritt 128) resultieren in dem Ausführungsbeispiel in Figur 3b ein zusammenhängender kartierter Bereich 58 sowie drei einzelne, unkartierte Flächenbereiche 60.

Entsprechend Verfahrensschritt 132, schematisch dargestellt in Figur 3c, bewegt sich das autonome Roboterfahrzeug 10 mittels einer Transferfahrt 72 vom Endpunkt der initialen Kartierungsfahrt zu einem Punkt 70 auf einer der identifizierten Grenzlinien 66 (äquivalent auch 64,56; vgl. Figur 3e, 4). Dieser Punkt liegt insbesondere ca. 2 m vom Ende der Grenzlinie 66 entfernt. An diesem Punkt 70 angekommen, wird in einem nächsten Verfahrensschritt 134 eine Kartierung des an die Grenzlinie 66 (äquivalent 56, 64) angrenzenden unkartierten Flächenbereichs 60 begonnen.

Die anschließende Kartierung dieses bislang unkartierten Flächenbereichs 60 ist in Figur 3d dargestellt (Verfahrensschritt 134). Ist auch dieser Bereich kartiert, wiederholen sich die Verfahrensschritte des Auswahl des Punktes 70 (Verfahrensschritt 130), der Transferfahrt 72 (Verfahrensschritt 132) sowie der Kartierung des unkartierten Bereichs 60 (Verfahrensschritt 134) für die beiden folgenden, noch unkartierten Flächenbereiche 60.

In Figur 3e ist dargestellt, welche Bahnen 52 sowie Transferfahrten 72 das autonome Roboterfahrzeug 10 am Ende sowohl der initialen Kartierungsfahrt (Verfahrensblock 102) als auch der weiteren Kartierungsfahrten (Verfahrensschritte 130-136) zurückgelegt hat. Es resultieren insgesamt drei Transferfahrten 72 (zuzüglich der Transferfahrt des Roboterfahrzeugs 10 zurück in die Basisstation 46, hier nicht dargestellt). Das Resultat ist eine flächendeckend kartierte Bearbeitungsfläche 12, aus der die Koordinaten für die Hindernisse 16 und für die kartierten, für das autonome Roboterfahrzeug 10 zugänglichen Bearbeitungsflächen 58, entnehmbar sind. In dem dargestellten Ausführungsbeispiel findet eine Bearbeitung der Bearbeitungsfläche 12 während der Ausführung des Verfahrens zur Kartierung statt, so dass am Ende der initialen Kartierungsfahrt sowie der weiteren Kartierungsfahrten eine vollständige Bearbeitung der Bearbeitungsfläche 12 stattgefunden hat. Wie beschrieben kann die Karte in diesem Ausführungsbeispiel nach Erreichen der Basisstation 46 wieder gelöscht werden, insbesondere nicht gespeichert werden.

In einer alternativen Ausführungsform des erfindungsgemäßen Verfahrens kann die erstellte Karte auch zur weiteren Verarbeitung, insbesondere zur Optimierung von Navigationsverfahren des autonomen Roboterfahrzeugs 10, gespeichert sowie an die Recheneinheit 22 oder die Datenkommunikationsschnittstelle 24 weitergegeben werden.

Figur 4 zeigt eine schematische Aufsicht auf die zu bearbeitende Bearbeitungsfläche 12, auf der sich das autonome Roboterfahrzeug 10, insbesondere der autonome Rasenmäher 10', befindet und fortbewegt. In diesem Darstellungsbeispiel hat das autonome Roboterfahrzeug 10, insbesondere der autonome Rasenmäher 10', mehrfach eine maximal zurückzulegende Streckenlänge (dargestellt durch die gestrichelte Linie 62') auf mehreren befahrenen Bahnen 62 erreicht. Beispielsweise kann diese maximal zurückzulegende Streckenlänge zum Vorteil einer genaueren Positionsbestimmung auf ca. 10 m begrenzt sein. In Folge der dadurch initiierten 180°-Wenden 68 verbleibt ein unkartierter Flächenbereich 60, der mittels Grenzlinien 64 in Verlängerung der jeweils zurückgelegten Bahnen 62 markiert wird. Besonders vorteilhaft wird dieser unkartierte Flächenbereich 60 nach Beenden der initialen Kartierungsfahrt im Rahmen einer weiteren Kartierungsfahrt (Verfahrensschritt 146) des autonomen Roboterfahrzeugs kartiert.

## Patentansprüche

1. Verfahren zur Kartierung einer Bearbeitungsfläche (12,12'), insbesondere zur Bestimmung einer Bearbeitungsfläche (12,12') als Bestandteil eines Navigierverfahrens für autonome Roboterfahrzeuge (10,10'), **dadurch gekennzeichnet, dass**
• Grenzlinien (66) zwischen aneinander angrenzenden kartierten (58) und unkartierten (60) Flächenbereichen der zu kartierenden Bearbeitungsfläche (12,12') durch Vergleich von zurückgelegten Streckenlängen des auf einer initialen Kartierungsfahrt (102) die Bearbeitungsfläche (12,12') befahrenden Roboterfahrzeugs (10,10') identifiziert werden,
• eine Kartierung eines an eine Grenzlinie (66,64,56) angrenzenden unkartierten Flächenbereichs (60) von einem Punkt (70) auf einer solchen identifizierten Grenzlinie (66,64,56) im Rahmen einer weiteren Kartierungsfahrt (146) des Roboterfahrzeugs (10,10') in den unkartierten Flächenbereich (60) initiiert wird und
• eine Karte der Bearbeitungsfläche (12,12') auf Grundlage der durch das Roboterfahrzeug (10,10') kartierten Flächenbereiche (58) erstellt wird.

2. Verfahren nach Anspruch 1, **dadurch gekennzeichnet, dass** die initiale Kartierungsfahrt (102) und die weitere Kartierungsfahrt (146) über eine Transferfahrt (72) des Roboterfahrzeugs (10,10') verbunden sind.

3. Verfahren nach einem der Ansprüche 1-2, **dadurch gekennzeichnet, dass** eine Grenzlinie (66) zwischen aneinander angrenzenden kartierten (58) und unkartierten (60) Flächenbereichen identifiziert wird, wenn sich zurückgelegte Streckenlängen des Roboterfahrzeugs (10,10') auf nebeneinanderliegenden Bahnen (52a,52b), insbesondere aufeinanderfolgenden Bahnen, um einen Relativ- und/oder Absolutbetrag voneinander unterscheiden.

4. Verfahren nach einem der Ansprüche 1-3, **dadurch gekennzeichnet, dass** eine identifizierte Grenzlinie (66) der längeren (52d) zweier nebeneinanderliegenden Bahnen (52a,52b), insbesondere aufeinanderfolgenden Bahnen, zugeordnet wird.

5. Verfahren nach einem der Ansprüche 1-4, **dadurch gekennzeichnet, dass** eine identifizierte Grenzlinie (66) denjenigen Teil einer längeren Bahn (52d), insbesondere parallelen Bahn, darstellt, der über die verglichene Strecke der kürzeren Bahn (52c) hinausragt.

6. Verfahren nach einem der Ansprüche 1-5, **dadurch gekennzeichnet, dass** das Roboterfahrzeug (10,10') die zu kartierende Bearbeitungsfläche (12,12') während einer Kartierungsfahrt in definiertem Muster, vorzugsweise in parallelen Bahnen (52), insbesondere nebeneinanderliegenden Bahnen (52a,52b), mit 180°-Wenden (68), abfährt.

7. Verfahren nach einem der Ansprüche 1-6, **dadurch gekennzeichnet, dass** nach Beenden der initialen Kartierungsfahrt (102) ein Punkt (70) auf einer identifizierten Grenzlinie (66,64,56) angefahren wird und von diesem Punkt aus die Kartierung des an die Grenzlinie (66,64,56) angrenzenden unkartierten Flächenbereichs (60) im Rahmen einer weiteren Kartierungsfahrt (146) des Roboterfahrzeugs (10,10') in den angrenzenden unkartierten Flächenbereich (60) initiiert wird.

8. Verfahren nach Anspruch 7, **dadurch gekennzeichnet, dass** bei Erreichen eines Hindernisses (16) auf der ersten Bahn der weiteren Kartierungsfahrt (146), das einen geringeren Abstand als eine definierte Entfernung von dem Punkt (70) aufweist, ein weiterer Punkt (70') auf der Grenzlinie (66,64,56) angefahren wird.

9. Verfahren nach Anspruch 8, **dadurch gekennzeichnet, dass** sich der weitere Punkt (70') in definiertem Abstand zu dem ersten Punkt (70) auf der Grenzlinie (66,64,56) befindet, insbesondere einem Abstand, der im Wesentlichen der Breite des Roboterfahrzeugs (10,10') entspricht, **und dass** von diesem weiteren Punkt (70') aus die Kartierung des an die Grenzlinie (66,64,56) angrenzenden unkartierten Flächenbereichs (60) im Rahmen der weiteren Kartierungsfahrt (146) erneut initiiert wird.

10. Verfahren nach einem der Ansprüche 1-9, **dadurch gekennzeichnet, dass** der ersten zurückgelegten Bahn (50) der initialen Kartierungsfahrt (102) auf deren gesamten Strecke eine Grenzlinie (56) zugewiesen wird.

11. Verfahren nach einem der Ansprüche 1-10, **dadurch gekennzeichnet, dass** jeder zurückgelegten Bahn (62) einer Kartierungsfahrt, bei der eine definierte Bahnlänge erreicht wurde, eine Grenzlinie (64) zugewiesen wird, die sich in Verlängerung der Bahn (62) in Fahrtrichtung des Roboterfahrzeugs (10,10') erstreckt.

12. Verfahren nach einem der Ansprüche 1-11, **dadurch gekennzeichnet, dass** die Karte der Bearbeitungsfläche (12,12') zumindest als Gesamtfläche der durch das Roboterfahrzeug (10,10') kartierten Flächenbereiche (58) erstellt wird.

13. Verfahren nach einem der Ansprüche 1-12, **dadurch gekennzeichnet, dass** während der initialen Kartierungsfahrt (102) und/oder weiteren Kartierungsfahrten (146) eine Bearbeitung der Bearbeitungsfläche (12,12') stattfindet.

14. Verfahren nach einem der Ansprüche 1-13, **dadurch gekennzeichnet, dass** die im Zuge der initialen Kartierungsfahrt (102) und/oder weiteren Kartierungsfahrten (146) erstellte Karte für die Navigation des Roboterfahrzeugs (10,10') während nachfolgender Fahrten zur Bearbeitung der Bearbeitungsfläche (12,12') verwendet wird.

15. Verfahren nach einem der Ansprüche 1-13, **dadurch gekennzeichnet, dass** das Verfahren zur Kartierung bei jeder Fahrt des Roboterfahrzeugs (10,10'), insbesondere jeder Fahrt zur Bearbeitung der Bearbeitungsfläche (12,12'), ausgeführt wird.

16. Kartierungs- und/oder Navigationsvorrichtung eines autonomen Roboterfahrzeugs (10,10') zur Ausführung eines Verfahrens zur Kartierung einer Bearbeitungsfläche (12,12'), insbesondere zur Bestimmung einer Bearbeitungsfläche (12,12'), aufweisend zumindest
• eine Recheneinheit (22),
• eine Antriebseinheit (30) zur Bewegung des Roboterfahrzeugs (10,10') und
• eine Vorrichtung zur Ermittlung von Positions- und/oder Odometriedaten (44),
**dadurch gekennzeichnet, dass**
• die Recheneinheit (22) Grenzlinien (66) zwischen aneinander angrenzenden kartierten (58) und unkartierten (60) Flächenbereichen der zu kartierenden Bearbeitungsfläche (12,12') durch Vergleich von von der Vorrichtung zur Ermittlung von Positions- und/oder Odometriedaten (44) erhaltenen zurückgelegten Streckenlängen des auf einer initialen Kartierungsfahrt (102) die Bearbeitungsfläche (12,12') befahrenden Roboterfahrzeugs (10,10') identifiziert,
• die Antriebseinheit (30) dazu vorgesehen ist, einen Punkt (70) auf einer identifizierten Grenzlinie (66,64,56) anzufahren, um eine Kartierung eines an die Grenzlinie (66,64,56) angrenzenden unkartierten Flächenbereichs (60) im Rahmen einer weiteren Kartierungsfahrt (146) des Roboterfahrzeugs (10,10') in den unkartierten Flächenbereich (60) durchzuführen und
• die Recheneinheit (22) eine Karte der Bearbeitungsfläche (12,12') auf Grundlage der durch das Roboterfahrzeug (10,10') kartierten Flächenbereiche (58) erstellt.

17. Autonomes Roboterfahrzeug (10,10') aufweisend zumindest eine Kartierungs- und/oder Navigationsvorrichtung nach Anspruch 16 zur Ausführung eines Verfahrens zur Kartierung einer Bearbeitungsfläche (12,12'), insbesondere eines Verfahrens nach einem der Ansprüche 1-15.

## Claims

1. Method for mapping a processing area (12, 12'), in particular for determining a processing area (12, 12'), as part of a navigating method for autonomous robot vehicles (10, 10'), **characterized in that**
• boundary lines (66) between adjoining mapped (58) and unmapped (60) subareas of the processing area (12, 12') to be mapped are identified by comparing distances covered by the robot vehicle (10, 10') traveling over the processing area (12, 12') on an initial mapping trip (102),
• mapping of an unmapped subarea (60) adjoining a boundary line (66, 64, 56) is initiated from a point (70) on such an identified boundary line (66, 64, 56) in the course of a further mapping trip (146) of the robot vehicle (10, 10') into the unmapped subarea (60) and
• a map of the processing area (12, 12') is created on the basis of the subareas (58) mapped by the robot vehicle (10, 10').

2. Method according to Claim 1, **characterized in that** the initial mapping trip (102) and the further mapping trip (146) are connected by way of a transfer trip (72) of the robot vehicle (10, 10').

3. Method according to either of Claims 1 and 2, **characterized in that** a boundary line (66) between adjoining mapped (58) and unmapped (60) subareas is identified if distances covered by the robot vehicle (10, 10') on paths lying next to one another (52a, 52b), in particular paths following one another, differ from one another by a relative and/or absolute amount.

4. Method according to one of Claims 1-3, **characterized in that** an identified boundary line (66) is assigned to the longer (52d) of two paths (52a, 52b) lying next to one another, in particular paths following one another.

5. Method according to one of Claims 1-4, **characterized in that** an identified boundary line (66) represents the part of a longer path (52d), in particular parallel path, that extends beyond the compared distance of the shorter path (52c).

6. Method according to one of Claims 1-5, **characterized in that** the robot vehicle (10, 10') travels over the processing area (12, 12') to be mapped during a mapping trip in a defined pattern, preferably in parallel paths (52), in particular paths (52a, 52b) lying next to one another with 180° turns (68).

7. Method according to one of Claims 1-6, **characterized in that,** after ending of the initial mapping trip (102), a point (70) on an identified boundary line (66, 64, 56) is traveled to and the mapping of the unmapped subarea (60) adjoining the boundary line (66, 64, 56) is initiated from this point in the course of a further mapping trip (146) of the robot vehicle (10, 10') into the adjoining unmapped subarea (60) .

8. Method according to Claim 7, **characterized in that,** when an obstacle (16) on the first path of the further mapping trip (146) that is at a distance less than a defined distance from the point (70) is reached, a further point (70') on the boundary line (66, 64, 56) is traveled to.

9. Method according to Claim 8, **characterized in that** the further point (70') is located at a defined distance from the first point (70) on the boundary line (66, 64, 56), in particular a distance that corresponds substantially to the width of the robot vehicle (10, 10'), **and in that** the mapping of the unmapped subarea (60) adjoining the boundary line (66, 64, 56) is re-initiated from this further point (70') in the course of the further mapping trip (146) .

10. Method according to one of Claims 1-9, **characterized in that** a boundary line (56) is allocated to the first path (50) covered of the initial mapping trip (102) over its entire distance.

11. Method according to one of Claims 1-10, **characterized in that** each path (62) covered of a mapping trip in which a defined path length has been reached is allocated a boundary line (64), which extends as an extension of the path (62) in the direction of travel of the robot vehicle (10, 10').

12. Method according to one of Claims 1-11, **characterized in that** the map of the processing area (12, 12') is created at least as an overall area of the subareas (58) mapped by the robot vehicle (10, 10').

13. Method according to one of Claims 1-12, **characterized in that** processing of the processing area (12, 12') takes place during the initial mapping trip (102) and/or further mapping trips (146).

14. Method according to one of Claims 1-13, **characterized in that** the map created in the course of the initial mapping trip (102) and/or further mapping trips (146) is used for the navigation of the robot vehicle (10, 10') during subsequent trips for the processing of the processing area (12, 12').

15. Method according to one of Claims 1-13, **characterized in that** the mapping method is carried out in every trip of the robot vehicle (10, 10'), in particular every trip for processing the processing area (12, 12').

16. Mapping and/or navigation device of an autonomous robot vehicle (10, 10') for carrying out a method for mapping a processing area (12, 12'), in particular for determining a processing area (12, 12'), having at least
• a computing unit (22),
• a driving unit (30) for moving the robot vehicle (10, 10') and
• a device for ascertaining position and/or odometry data (44),
**characterized in that**
• the computing unit (22) identifies boundary lines (66) between adjoining mapped (58) and unmapped (60) subareas of the processing area (12, 12') to be mapped by comparing distances covered by the robot vehicle (10, 10') traveling over the processing area (12, 12') on an initial mapping trip (102) that are obtained by the device for ascertaining position and/or odometry data (44),
• the driving unit (30) is provided for traveling to a point (70) on an identified boundary line (66, 64, 56) in order to carry out mapping of an unmapped subarea (60) adjoining the boundary line (66, 64, 56) in the course of a further mapping trip (146) of the robot vehicle (10, 10') into the unmapped subarea (60) and
• the computing unit (22) creates a map of the processing area (12, 12') on the basis of the subareas (58) mapped by the robot vehicle (10, 10').

17. Autonomous robot vehicle (10, 10') having at least one mapping and/or navigation device according to Claim 16 for carrying out a method for mapping a processing area (12, 12'), in particular a method according to one of Claims 1-15.

## Revendications

1. Procédé de cartographie d'une surface à traiter (12, 12'), en particulier pour la détermination d'une surface à traiter (12, 12') comme composante d'un procédé de navigation pour des véhicules robots autonomes (10, 10'), **caractérisé en ce que**
• on identifie des lignes limites (66) entre des zones de surface cartographiées (58) et non cartographiées (60) adjacentes les unes aux autres de la surface à traiter à cartographier (12, 12') par comparaison de longueurs de déplacements du véhicule robot (10, 10') parcourant la surface à traiter (12, 12') sur un trajet de cartographie initial (102),
• on démarre une cartographie d'une zone de surface non cartographiée (60) adjacente à une ligne limite (66, 64, 56) à partir d'un point (70) sur une telle ligne limite identifiée (66, 64, 56) dans le cadre d'un autre trajet de cartographie (146) du véhicule robot (10, 10') dans la zone de surface non cartographiée (60), et
• on établit une carte de la surface à traiter (12, 12') sur la base des zones de surface (58) cartographiées par le véhicule robot (10, 10').

2. Procédé selon la revendication 1, **caractérisé en ce que** le trajet de cartographie initial (102) et l'autre trajet de cartographie (146) sont reliés par un trajet de transfert (72) du véhicule robot (10, 10').

3. Procédé selon une des revendications 1 à 2, **caractérisé en ce que** l'on identifie une ligne limite (66) entre des zones de surface cartographiées (58) et non cartographiées (60) adjacentes les unes aux autres, lorsque des longueurs de parcours parcourues du véhicule robot (10, 10') sur des chemins juxtaposés (52a, 52b), en particulier des chemins successifs, diffèrent l'une de l'autre d'une quantité relative et/ou absolue.

4. Procédé selon l'une quelconque des revendications 1 à 3, **caractérisé en ce que** l'on associe une ligne limite identifiée (66) au plus long (52d) de deux chemins juxtaposés (52a, 52b), en particulier de chemins successifs.

5. Procédé selon l'une quelconque des revendications 1 à 4, **caractérisé en ce qu'**une ligne limite identifiée (66) représente la partie d'un chemin plus long (52d), en particulier d'un chemin parallèle, qui s'étend au-delà du parcours comparé du chemin plus court (52c).

6. Procédé selon l'une quelconque des revendications 1 à 5, **caractérisé en ce que** le véhicule robot (10, 10') parcourt la surface à traiter à cartographier (12, 12') pendant un trajet de cartographie suivant un motif défini, de préférence en chemins parallèles (52), en particulier en chemins juxtaposés (52a, 52b), avec rotation de 180° (68).

7. Procédé selon l'une quelconque des revendications 1 à 6, **caractérisé en ce qu'**après l'achèvement du trajet de cartographie initial (102) on arrive à un point (70) sur la ligne limite identifiée (66, 64, 56) et on démarre à partir de ce point la cartographie de la zone de surface non cartographiée (60) adjacente à la ligne limite (66, 64, 56) dans le cadre d'un autre trajet de cartographie (146) du véhicule robot (10, 10') dans la zone de surface non cartographiée adjacente (60).

8. Procédé selon la revendication 7, **caractérisé en ce que** lors de l'arrivée à un obstacle (16) sur le premier chemin de l'autre trajet de cartographie (146), qui présente une distance plus faible qu'un éloignement défini du point (70), on arrive à un autre point (70') sur la ligne limite (66, 64, 56).

9. Procédé selon la revendication 8, **caractérisé en ce que** l'autre point (70') se trouve à une distance définie du premier point (70) sur la ligne limite (66, 64, 56), en particulier à une distance qui correspond essentiellement à la largeur du véhicule robot (10, 10'), et **en ce que** l'on démarre de nouveau à partir de cet autre point (70') la cartographie de la zone de surface non cartographiée (60) adjacente à la ligne limite (66, 64, 56) dans le cadre de l'autre trajet de cartographie (146).

10. Procédé selon l'une quelconque des revendications 1 à 9, **caractérisé en ce qu'**une ligne limite (56) est assignée au premier chemin parcouru (50) du trajet de cartographie initial (102) sur toute l'extension de celui-ci.

11. Procédé selon l'une quelconque des revendications 1 à 10, **caractérisé en ce qu'**une ligne limite (64), qui s'étend dans le prolongement du chemin (62) dans la direction de marche du véhicule robot (10, 10'), est assignée à chaque chemin parcouru (62) d'un trajet de cartographie, dans lequel une longueur de chemin définie a été atteinte.

12. Procédé selon l'une quelconque des revendications 1 à 11, **caractérisé en ce que** l'on établit la carte de la surface à traiter (12, 12') au moins sous la forme de la surface totale des zones de surface (58) cartographiées par le véhicule robot (10, 10').

13. Procédé selon l'une quelconque des revendications 1 à 12, **caractérisé en ce qu'**il se produit un traitement de la surface à traiter (12, 12') pendant le trajet de cartographie initial (102) et/ou les autres trajets de cartographie (146).

14. Procédé selon l'une quelconque des revendications 1 à 13, **caractérisé en ce que** l'on utilise la carte établie au cours du trajet de cartographie initial (102) et/ou des autres trajets de cartographie (146) pour la navigation du véhicule robot (10, 10') pendant des trajets ultérieurs pour le traitement de la surface à traiter (12, 12').

15. Procédé selon l'une quelconque des revendications 1 à 13, **caractérisé en ce que** l'on exécute le procédé de cartographie lors de chaque trajet du véhicule robot (10, 10'), en particulier lors de chaque trajet pour le traitement de la surface à traiter (12, 12').

16. Dispositif de cartographie et/ou de navigation d'un véhicule robot autonome (10, 10') pour la mise en oeuvre d'un procédé de cartographie d'une surface à traiter (12, 12'), en particulier pour la détermination d'une surface à traiter (12, 12'), présentant au moins
• un ordinateur (22),
• une unité motrice (30) pour le mouvement du véhicule robot (10, 10'), et
• un dispositif pour déterminer des données de position et/ou d'odométrie (44),
**caractérisé en ce que**
• l'ordinateur (22) identifie des lignes limites (66) entre des zones de surface cartographiées (58) et non cartographiées (60) adjacentes les unes aux autres de la surface à traiter à cartographier (12, 12') par comparaison de longueurs de déplacements effectuées par le véhicule robot (10, 10') parcourant la surface à traiter (12, 12') sur un trajet de cartographie initial (102) obtenues par le dispositif pour la détermination de données de position et/ou d'odométrie (44),
• l'unité motrice (30) est prévue pour arriver en un point (70) sur une ligne limite identifiée (66, 64, 56), afin d'exécuter une cartographie d'une zone de surface non cartographiée (60) adjacente à la ligne limite (66, 64, 56) dans le cadre d'un autre trajet de cartographie (146) du véhicule robot (10, 10') dans la zone de surface non cartographiée (60), et
• l'ordinateur (22) établit une carte de la surface à traiter (12, 12') sur la base des zones de surface (58) cartographiées par le véhicule robot (10, 10').

17. Véhicule robot autonome (10, 10') présentant au moins un dispositif de cartographie et/ou de navigation selon la revendication 16 pour la mise en oeuvre d'un procédé de cartographie d'une surface à traiter (12, 12'), en particulier d'un procédé selon l'une quelconque des revendications 1 à 15.
